# EUROPÄISCHE PATENTSCHRIFT

(11) **EP 2 582 542 B1**
(45) Veröffentlichungstag und Bekanntmachung des Hinweises auf die Patenterteilung: **05.10.2016**
(21) Anmeldenummer: 11726717.9
(22) Anmeldetag: 15.06.2011
(51) Int. Cl.: B60P 1/00, B60L 8/00, B60L 7/18, B60K 1/04, B60S 5/06, B60L 11/18

(54) **LADUNGSTRÄGERSYSTEM MIT EINEM ENERGIESPEICHER**
LOAD CARRIER SYSTEM COMPRISING AN ENERGY STORE
SYSTÈME SUPPORT DE CHARGE COMPORTANT UN ACCUMULATEUR D'ÉNERGIE

(30) Priorität: 15.06.2010 DE 102010024382
(43) Veröffentlichungstag der Anmeldung: 24.04.2013
(73) Patentinhaber: Fraunhofer-Gesellschaft zur Förderung der angewandten Forschung e.V., 80686 München (DE)
(72) Erfinder: RICHTER, Klaus, 39114 Magdeburg (DE); HOFFMANN, Hartwig, 04720 Mochau (DE); SCHULZ, Jürgen, 04720 Döbeln (DE)
(74) Vertreter: Pfenning, Meinig & Partner mbB
(86) Internationale Anmeldenummer: PCT/EP2011/003051
(87) Internationale Veröffentlichungsnummer: WO 2011/157452

(56) Entgegenhaltungen:
- WO-A1-98/51531
- DE-A1-102007 051 310
- DE-U1- 9 305 491

## Beschreibung

Die Erfindung betrifft ein Ladungsträgersystem mit einem Energiespeicher. Die Erfindung betrifft außerdem ein Fahrzeugsystem umfassend ein Fahrzeug und ein derartiges Laduhgsträgersystem. Die Erfindung betrifft ferner ein Verfahren zum Beladen und Entladen eines solchen Fahrzeugsystems.

Für den Transport von Gegenständen mit einem Elektrofahrzeug (also einem Fahrzeug mit einem Elektromotor für einen Antrieb des Fahrzeugs) sind Ladungsträgersysteme bekannt, welche einen Behälter zur Aufnahme der Gegenstände (des Transportguts) umfassen und außerdem Energiespeicher beinhalten zur Energieversorgung des Elektromotors des Fahrzeugs. Ein entsprechendes Ladungsträgersystem ist in der Druckschrift EP 1 481 838 A2 beschrieben. Eine dort gezeigte Ausführungsform weist eine Bodengruppe auf, welche einen Energiespeicher beinhaltet und die mit Schienen ausgestattet ist zur Herstellung einer lösbaren Verbindung mit dem Fahrzeug. Die Bodengruppe weist ferner eine Energieschnittstelle auf zur Verbindung des Energiespeichers mit dem Elektromotor des Fahrzeugs.

Auf einer Oberseite der dort gezeigten Bodengruppe ist ein Aufbau mit einem Behälter zur Aufnahme von Gegenständen angeordnet. Ein derartiger Aufbau des Ladungsträgersystems oberhalb der Bodengruppe wird im Folgenden auch als Ladungsträgeraufbau (oder kurz Ladungsträger) bezeichnet. In einer in der Druckschrift EP 1 481 838 A2 gezeigten Ausführungsformen umfasst der Ladungsträgeraufbau Verriegelungsstutzen zur Sicherung der lösbaren Verbindung zwischen dem Ladungsträgersystem und dem Fahrzeug. Diese Ausführungsform eignet sich ebenso wie die anderen in der genannten Druckschrift gezeigten Ausführungsformen besonders für eine manuelle Bedienung durch eine einzelne Person ohne weiterer Vorrichtungen oder Hilfsmittel (Verbinden des Ladungsträgersystems mit dem Fahrzeug und ein entsprechendes Trennen des Ladungsträgersystems von dem Fahrzeug).

Im gewerblichen Gütertransport werden Güter (Wirtschaftseinheiten von Industrie, Handel, Dienstleistungen) sehr unterschiedlicher Größen, Massen und Empfindlichkeiten gegenüber Umgebungseinflüssen transportiert. Zu diesem Zweck werden ein Vielzahl unterschiedlicher Ladungsträger, wie beispielsweise Container, Iso-Container, Kühlcontainer, Luftfrachtcontainer, Luftfrachtpaletten und dergleichen eingesetzt, welche zum einen als offene oder geschlossene Behälter der Gütern dienen, eine mechanische Manipulation der Güter (des Ladeguts) erleichtern und diese gleichzeitig vor äußeren Einflüssen schützen. Typische Bereiche des gewerblichen Gütertransports (des Wirtschaftsverkehrs) sind unter anderem der innerbetriebliche Transport sowie der innerstädtische Transport, aber auch der Transport via Luft- oder Seefracht, sowie der Transport durch den Schienenverkehr.

Die Druckschrift D1 (DE9305491) wird als nächstliegender Stand der Technik angesehen und offenbart die Merkmale der Präambel des unabhängigen Anspruchs 1.

Es ist die Aufgabe der vorliegenden Erfindung, die Eignung des oben beschriebenen Ladungsträgersystems für den gewerblichen Gütertransport zu verbessern. Insbesondere soll ein Ladungsträgersystem vorgeschlagen werden, mit dem ein höheres Maß an Flexibilität in der Energieversorgung von Verbrauchern im Fahrzeug und/oder im Ladungsträgersystem entlang von Transportstrecken ermöglichst wird. Ferner soll ein Fahrzeugsystem sowie ein Verfahren zum Laden und Entladen eines solchen Fahrzeugsystems vorgeschlagen werden, mit dem ein höheres Maß an Flexibilität in der Energieversorgung von Verbrauchern im Fahrzeug und/oder im Ladungsträgersystem entlang von Transportstrecken ermöglichst wird.

Die genannte Aufgabe wird gelöst durch ein Ladungsträgersystem gemäß Anspruch 1, durch ein Fahrzeugsystem gemäß Anspruch 7 sowie durch ein Ladeverfahren gemäß Anspruch 10 und durch ein Entladeverfahren gemäß Anspruch 11 gelöst. Weiterentwicklungen sind Gegenstände der Unteransprüche.

Demnach umfasst ein erfindungsgemäßes Ladungsträgersystem für ein Fahrzeug, insbesondere für ein Elektrofahrzeug, eine Bodengruppe, die einen Energiespeicher beinhaltet und die außerdem eine erste Verbindungsvorrichtung aufweist zum Herstellen einer lösbaren Verbindung zwischen der Bodengruppe des Ladungsträgersystems und dem Fahrzeug, und wobei das La-dungsträgersystem einen Ladungsträgeraufbau umfasst zum Aufnehmen eines Transportguts, wobei die Bodengruppe als ein von dem Ladungsträgeraufbau lösbarer Adapter ausgestaltet ist, wobei der Adapter ferner eine zweite Verbindungsvorrichtung aufweist, die mit einer dritten Verbindungsvorrichtung des Ladungsträgeraufbaus verbindbar ist zum Herstellen einer lösbaren Verbindung zwischen dem Adapter und dem Ladungsträgeraufbau.

Dabei kann der Energiespeicher eine Elektrobatterie oder ein Brennstoffbehälter für eine Brennstoffzelle beinhalten. Der Energiespeicher kann auch als Flow/Gas-Batterie ausgestaltet sein zum Betreiben in einem Redox-Flow-Verfahren, einem Hybrid-Flow-Verfahren oder einem Metall-Luft-Verfahren. Ferner kann der Adapter einen Hohlraum aufweisen zur Aufnahme des Energiespeichers und zum Schutz des Energiespeichers vor mechanischen Einwirkungen und anderen Umwelteinflüssen. In dem Hohlraum können außerdem weitere Systeme enthalten sein, wie etwa Sensor-, Telematik-, Lokalisierungs-, Regelungs- oder Steuereinheiten sowie Kühlaggregate für einen als Kühlcontainer ausgestalteten Ladungsträgeraufbau.

Die Bodengruppe des erfindungsgemäßen Ladungsträgersystems, die den Energiespeicher umfasst, ist wie im beschriebenen Stand der Technik zusammen mit dem Ladungsträgeraufbau (und dem darin enthaltenen Transportgut) von dem Fahrzeug lösbar und trennbar. Ein wesentlicher Unterschied der Erfindung gegenüber dem oben beschriebenen Stand der Technik ist, dass der Ladungsträgeraufbau von dem Fahrzeug trennbar ist, ohne dass gleichzeitig die Bodengruppe, die den Energiespeicher umfasst, von dem Fahrzeug getrennt werden muss. Dies bringt einen wesentlichen Vorteil mit sich, da nämlich auf diese Weise der Energiespeicher nur im Bedarfsfall von dem Fahrzeug getrennt werden muss, beispielsweise wenn ein Ladestand des Energiespeichers niedrig ist und ein Auswechseln des Energiespeichers nötig ist.

Im innerstädtischen Ladungstransport sind typische Transportstrecken häufig kleiner ist als eine Reichweite des Energiespeichers. Dann besteht häufig die Situation, dass an einem Ladungsumschlagort das Fahrzeug nur beladen oder entladen werden muss, während der Energiespeicher nicht ausgetauscht werden muss. Dies ist mit dem erfindungsgemäßen Ladungsträgersystems auf vorteilhafte Weise möglich.

Durch die Lösbarkeit und die Trennbarkeit des Adapters (der Bodengruppe) von dem Ladungsträgeraufbau wird somit gegenüber dem Stand der Technik eine größere Flexibilität bei einem Beladen und Entladen des Fahrzeugs, sowie hinsichtlich eines Austauschs des Energiespeichers erzielt. Dadurch können entsprechende Lade- und Entladeverfahren sowie Verfahren eines Energiespeicherwechsel oder eines Wiederaufladens eines Energiespeichers gegenüber dem Stand der Technik wesentlich vereinfacht und beschleunigt werden.

Ein weiterer entscheidender Vorteil des erfindungsgemäßen Ladungsträgersystems ist, dass sowohl die erste Verbindungsvorrichtung, die der Herstellung einer Verbindung mit dem Fahrzeug dient, wie auch die zweite Verbindungsvorrichtung der Bodengruppe, die der Herstellung einer Verbindung mit dem Ladungsträgeraufbau dient, jeweils mehrere unterschiedliche Verbindungselemente umfassen kann. Auf diese Weise kann eine Kompatibilität (Verbindbarkeit) der Bodengruppe (des Adapters) mit einer Vielzahl unterschiedlicher Ladungsträgeraufbauten und/oder unterschiedlicher Fahrzeugen erzielt werden, um die Flexibilität des Ladungsträgersystems weiter zu steigern.

Der Begriff der lösbaren Verbindung soll eine kraftschlüssige und/oder formschlüssige Verbindungen bezeichnen können sowie außerdem eine mechanische Stabilisierung, die mittels der jeweiligen Verbindungsvorrichtungen erzielt wird, beispielsweise zwischen dem Adapter und dem Ladungsträgeraufbau.

Die zweite Verbindungsvorrichtung des Adapters und die dritte Verbindungsvorrichtung des Ladungsträgeraufbaus sind korrespondierend zueinander ausgestaltet beispielsweise zur Ausbildung einer formschlüssigen und/oder kraftschlüssigen Verbindung zwischen der zweiten und dritten Verbindungsvorrichtung. Die genannten Verbindungsvorrichtungen können beispielsweise Verbindungselemente wie Bolzen und Bolzenlasche, Haken und Ösen, Twistlocks und Twistlockaufnahmen, Zapfen (Pilze) und entsprechende Zapfenaufnahmen oder andere Verbindungselemente oder durch Kombinationen unterschiedlicher Verbindungselemente umfassen. Dabei können die Verbindungselemente der zweiten Verbindungsvorrichtung des Adapters auf einer Oberseite oder auf Seitenflächen des Adapters angeordnet sein. Die Verbindungselemente der dritten Verbindungsvorrichtung des Ladungsträgeraufbaus können entsprechend auf einer Unterseite des Ladungsträgeraufbaus oder an Seitenflächen des Ladungsträgeraufbaus angeordnet sein.

Die erste Verbindungsvorrichtung des Adapters (der Bodengruppe) kann ebenfalls Verbindungselemente der oben genannten Art oder Kombinationen davon umfassen. Vorzugsweise sind die Verbindungselemente der ersten Verbindungsvorrichtung auf einer Unterseite oder an Seitenflächen des Adapters (der Bodengruppe) angeordnet.

Die genannten Verbindungsvorrichtungen können jeweils für eine händische (manuelle), mechanische oder automatisierte Herstellung und Lösung der jeweiligen Verbindungen ausgestaltet sein.

Ferner ist es mit dem hier vorgeschlagenen Ladungsträgersystem möglich, ein Transportgut auf unterschiedliche Fahrzeuge zu verladen (insbesondere entlang eines Transportweges), ohne dass ein Umladen des Transportguts von einem Ladungsträgeraufbau in einen anderen Ladungsträgeraufbau notwendig ist. Es ist lediglich notwendig, einen Adapter mit einer geeigneten ersten Verbindungsvorrichtung zu verwenden, welcher mit den unterschiedlichen Fahrzeugen verbindbar ist. Ebenso kann mit dem Adapter der Energiespeicher ausgewechselt werden, ohne dass ein Umladen des Transportguts von einem Ladungsträgeraufbau in einen anderen Ladungsträgeraufbau notwendig ist.

Für den Ladungsträgeraufbau kommen verschiedene Ausführungsformen in Frage. Insbesondere kann der Ladungsträgeraufbau als ein geschlossener oder offener Container ausgeführt sein. Ferner kann er als Kühlcontainer thermisch isoliert sein und ein Kühlaggregat umfassen zum Kühlen eines Transportguts. Dabei sind verschiedene Temperaturbereiche (insbesondere zum Tiefkühlen tiefgefrorener Lebensmittel (Gefriergut) oder zum Kühlen frischer, verderblicher Lebensmittel oder Schnittblumen) denkbar. Das Kühlaggregat kann aber genauso gut in der Bodengruppe integriert sein. Dann können entsprechende Verbindungselemente zwischen der Bodengruppe und dem als Kühlcontainer ausgestalteten Ladungsträgeraufbau vorgesehen sein zur Übertragung eines Kühlmediums (Kühlflüssigkeit oder ein Gas als Kühlmedium) zwischen der Bodengruppe und dem Kühlcontainer. Ferner ist es möglich (über entsprechende Schnittstellen) den Kühlaggregat mit dem Energiespeicher in der Bodengruppe zu verbinden für eine Energieversorgung des Kühlaggregats. Alternativ oder zusätzlich zum Kühlaggregat kann auch ein Klimaaggregat zur Erzeugung eines definierten Klimas (Temperatur, Luftfeuchtigkeit) in einem Laderaum des Ladungsträgeraufbau vorgesehen sein, der in dem Adapter und/oder im Ladungsträgeraufbau integriert sein kann. Ein solches Klimaaggregat kann insbesondere auch bei kalten Umgebungstemperaturen (etwa im Winter) dazu eingesetzt werden, ein Kälteempfindliches Transportgut (etwa frische Lebensmittel) durch Heizen vor zu großer Kälte zu schützen.

Das erfindungsgemäße Ladungsträgersystem kann Ladungsträgeraufbauten mit unterschiedlichen Fassungsvermögen (Ladevolumen) beinhalten. Für einen innerstädtischen Gütertransport haben sich insbesondere Ladungsträger mit einem Ladevolumen von etwa 10 m³ bewährt. Ein derartiger Ladungsträgeraufbau hat dann typischerweise eine Breite von etwa 2 m, eine Länge von etwa 2,4 m und eine Höhe von 2, 4 m. Außerdem ist es möglich mehrere Ladungsträgersysteme hier vorgeschlagener Art außerstädtisch mit einem Schwertransporter zu transportieren und innerstädtisch die Ladungsträgersysteme auf kleinere Transportfahrzeuge umzuladen.

Ein weiterer wichtiger Vorteil des erfindungsgemäßen Ladungsträgersystems ist, dass mehrere Adapter auf einem Fahrzeug übereinander stapelbar sind. Dabei sind ein unterster Adapter in einem solchen Stapel (über dessen erste Verbindungsvorrichtung) mit dem Fahrzeug und ein oberster Adapter in einem solchen Stapel (über dessen zweite Verbindungsvorrichtung) mit einem Ladungsträgeraufbau verbindbar. Außerdem sind jeweils zwei benachbarte Adapter in dem Stapel miteinander verbindbar (über deren erste und zweite Verbindungsvorrichtungen). Mittels eines solchen Stapels von Adaptern kann eine für das Fahrzeug verfügbare Gesamtenergiemenge gesteigert werden und somit eine Reichweite oder eine Leistung (Zugkraft, Geschwindigkeit) des Fahrzeugs vergrößert werden. Ferner sind auf diese Weise besonders einfach gleich mehrere Adapter gleichzeitig mit einem einzigen Fahrzeug von einem Umschlagort (oder Ladestation für Energiespeicher) zu einem zweiten Umschlagort (oder Ladestation für Energiespeicher) transportierbar.

Ein weiterer Vorteil der erfindungsgemäßen Ladungsträgersystems ist es, dass die Bodengruppe sehr stabil und mit einer hohen Tragkraft, Starrheit und Verwindungssteife ausgeführt sein kann. Ein auf diese Weise erhöhtes Gewicht der Bodengruppe kann ausgeglichen werden durch eine besonders leichte Ausführung des Ladungsträgeraufbaus (Leichtbauweise). Eine etwas geringere Stabilität eines solchen besonders leichten Ladungsträgeraufbaus wird ausgeglichen durch die besonders hohe Tragkraft, Starrheit und Verwindungssteife der Bodengruppe, welche über geeignete Verbindungsvorrichtungen der Bodengruppe und des Ladungsträgeraufbaus auf den Ladungsträgeraufbau übertragbar ist, so das eine hohe Gesamtstabilität des Ladungsträgersystems erzielbar ist. Ein derartiger besonders leichter Ladungsträgeraufbau eignet sich auch für eine Verwendung in der Luftfracht (mittels Flugzeugen), so dass ein Umladen des Transportguts von einem solchen Ladungsträgeraufbau in spezielle Luftfrachtcontainer vermieden werden kann. Ferner ist ein Ladungsträgeraufbau in Leichtbauweise in der Regel billiger herstellbar als in einer schweren und stabilen Ausführung. Darüberhinaus ist ein leichter Ladungsträgeraufbau an einem Umschlageort oder auch innerhalb eines Betriebsgeländers leichter und mit weniger Aufwand bewegbar (leichteres Handling).

Eine Ausführungsform des Ladungsträgersystems sieht vor, dass der Adapter Aufnahmen für Lastaufnahmemittel, wie etwa einen Gabelstapler, einen Hubstapler, einen Kran oder andere Lastaufnahmemittel aufweist. Insbesondere kommen Aufnahmen für Zinken von Gabelstaplern, Aufnahmen für Zinken einschließlich Lastrollen eines Hubwagens, Aufnahmen für einen Greifarm eines Krans, Aufnahmen für Verbindungszapfen, Verbindungsdorne oder Verbindungsbolzen (zum Beispiel von Sicherheitshebelroller) in Frage. Es können am Adapter auch Aufnahmen in Form von Auflageflächen für angetriebene oder nicht-angetriebene, externe Tragemittel (zum Beispiel eine Tragrolle oder ein Gurtband) mit oder ohne mechanische Führung am Adapter vorgesehen sein.

Ferner kann auch der Ladungsträgeraufbau derartige Aufnahmen aufweisen. Dann ist mit einem gegebenen Lastaufnahmemittel sowohl der Adapter (zusammen mit dem Ladungsträgeraufbau oder von diesem getrennt) wie auch der Ladungsträgeraufbau aufnehmbar und anhebbar oder absetzbar. Somit ist mit einem derartigen Ladungsträgersystem ein Wechsel des Energiespeichers an einem Fahrzeug durchführbar ohne zusätzlichen zeitlichen Aufwand und ohne einen zusätzlichen apparativen oder infrastrukturellen Aufwand (und ohne damit verbundene Investitions- und Betriebskosten), insbesondere ohne ein spezielles weiteres Lastaufnahmemittel und ohne ein zusätzliches Energiespeicherwechselsystem.

Ferner ist es somit möglich, einen Energiespeicherwechsel an einer Vielzahl von Umschlageorten durchzuführen (bei einem Versender oder Empfänger der Güter, oder einer anderen Transferstelle entlang der Logistikkette), da an einem solchen Umschlageort lediglich ein (mit den Aufnahmen am Adapter kompatibles) Lastaufnahmemittel zur Verfügung stehen muss. Falls ein solcher Wechsel des Energiespeichers erforderlich ist, ist es vorgesehen, den Adapter an den Aufnahmen des Adapters mit einem Lastaufnahmemittel aufzunehmen und von dem Fahrzeug zu trennen und einen anderen Adapter mit einem geladenen Energiespeicher auf das Fahrzeug aufzusetzen. Fall der Ladungsträgeraufbau nicht ausgetauscht werden soll, kann dieser mit einem weiteren Lastaufnahmemittel angehoben werden, um den Wechsel des Adapters zu ermöglichen.

Der Adapter des Ladungsträgersystems weist eine Schnittstelle auf, über die der in dem Adapter enthaltene Energiespeicher mit einer Schnittstelle eines Energieübertragungssystems des Fahrzeugs und/oder mit einer Schnittstelle eines Energieübertragungssystems des Ladungsträgeraufbaus verbindbar ist. Über eine entsprechende Verbindung mit den genannten Schnittstellen der Energieübertragungssysteme ist eine Energieversorgung von Energieverbrauchern im Fahrzeug, insbesondere einem elektrischen Antriebsmotor des Fahrzeugs oder einer Telematikeinheit, und/oder Energieverbrauchern im Ladungsträgeraufbau, wie beispielsweise einer aktiven Hebe/Senkvorrichtung, einem Kühlaggregat oder Klimaaggregat (zur Einstellung einer gewünschten Temperatur und Luftfeuchtigkeit), einer Beleuchtungseinrichtung oder einer Telematikeinheit herstellbar. Neben einer Energieübertragung von dem Energiespeicher aus an Verbraucher in dem Fahrzeug oder in dem Ladungsträgeraufbau ist auch eine umgekehrte Energieübertragung über die Energieübertragungssysteme des Fahrzeugs bzw. des Ladungsträgeraufbaus möglich für ein Aufladen des Energiespeichers, insbesondere über eine Lichtmaschine des Fahrzeugs, eine Rekuperationsbremse des Fahrzeugs zur Rückgewinnung und Speicherung von Bewegungsenergie bei Bremsvorgängen, oder über Solarzellen, welche beispielsweise auf dem Fahrzeug oder auf dem Ladungsträgeraufbau angeordnet sind.

Die genannten (Energie-)Schnittstellen können dabei als Steckverbindungen, also als Stecker bzw. Steckdose ausgestaltet sein. Es ist aber auch möglich, die Schnittstellen als Induktionsverbindungen auszuführen für eine kontaktlose Energieübertragung. Vorteilhafterweise sind die Schnittstellen so ausgeführt, dass eine Verbindung zwischen dem Energiespeicher und einem Energieübertragungssystem in dem Fahrzeug und/oder in dem Ladungsträgeraufbau automatisch bei einem Verbinden (Lösen) des Adapters mit (von) dem Fahrzeug bzw. des Ladungsträgeraufbaus herstellbar (lösbar) ist.

In einer Weiterentwicklung weist der Adapter des Ladungsträgersystems eine Datenschnittstelle auf für eine Datenübertragung zwischen der Datenschnittstelle des Adapters und einer Datenschnittstelle des Fahrzeugs und/oder einer Datenschnittstelle des Ladungsträgeraufbaus. Über derartige Datenschnittstellen, welche beispielsweise als Stecker oder Steckdosen, Induktionsschnittstellen oder Funk-Sender/Empfängereinrichtungen ausgeführt sein können, sind Identifizierungscodes und/oder Ortskoordinaten (mittels GPS, einem lokalen terrestrischen Lokalisierungssystem, beispielsweise auf WLAN-Basis oder auf Basis eines Sensornetzwerkes) einer im Adapter, im Fahrzeugs oder im Ladungsträgeraufbau integrierten Telematik/Lokalisierungseinheit übertragbar. Mittels Funk-Sender/Empfängereinrichtungen sind die genannten Daten auch an ein stationäres elektronisches Energiemanagementsystem (beispielsweise eines Logistik- oder Transportunternehmens) übertragbar. Neben der Nachverfolgung und Ortung des Adapters, des Fahrzeugs oder des Ladungsträgeraufbaus sind auf diese Weise auch beispielsweise Informationen über einen Betriebs- oder Ladezustand des Energiespeichers von dem Energiemanagementsystem auswertbar. Damit eignet sich das Ladungsträgersystem auch für eine Verwendung durch ein stationäres Energiemanagementsystems, welches dazu eingerichtet ist dynamische Fahrtrouten für Fahrzeuge mit derartigen Ladungsträgersystemen zu berechnen. Solche dynamische Fahrtrouten sind unter Berücksichtigung eines aktuellen Ladestands des Energiespeichers, einer geographischen Verteilung künftiger Fahrtziele des Fahrzeugs (Umschlagsorte) und einer Verteilung von verfügbaren Adapter mit aufgeladenen Energiespeichern berechnet und sind daraufhin optimiert, möglichst kurze Fahrtzeiten und Fahrtstrecken bei einem möglichst geringen Energieverbrauch und einer möglichst ununterbrochenen Energieversorgung zu gewährleisten. Zu diesem Zweck ist es auch möglich, ein Fahrzeug mit mehreren Adaptern zu beladen zur Erzielung einer größeren Reichweite oder zu einer optimierten Verteilung von Adaptern über mehrere Umschlageorte. Mit einem solchen Energiemanagementsystem, welches sich mit dem hier beschriebenen Ladungsträgersystem verwenden lässt, ist also durch die erfindungsgemäße Trennung von Adapter und Ladungsträgeraufbau auch eine Logistik der Güter von einer Logistik der Energiespeicher trennbar zur Verbesserung der Energieversorgung der Transportfahrzeuge.

In einer Ausführungsform des Ladungsträgersystems ist vorgesehen, dass der Adapter ausklappbare und/oder ausfahrbare Stützbeine aufweist. Dabei kann der Adapter außerdem einen Antriebmotor und/oder ein Hydrauliksystem umfassen für ein angetriebenes Ausklappen und/oder Ausfahren der Stützbeine, wobei der Antriebsmotor bzw. das Hydrauliksystem mit dem Energiespeicher des Adapters verbunden sein kann für eine Energieversorgung des Antriebsmotors bzw. das Hydrauliksystems. Alternativ kann der Antriebsmotor bzw. das Hydrauliksystem auch über eine der oben genannten Energieschnittstelle mit einem Energieübertragungssystem des Fahrzeugs oder des Ladungsträgeraufbaus verbunden sein.

Zur Erzielung einer Funktionalität einer Wechselbrücke sind die Stützbeine ausgeführt zur Herstellung eines Kontakts mit einem Boden oder mit einem Untergrund (beispielsweise einer Straße, eines Werkgeländes oder einer Lagerhalle) und zum Aufstellen des Adapters (mit oder ohne Ladungsträgeraufbau) auf diesem Boden oder Untergrund. Insbesondere können die Stützbeine Rollen oder Räder aufweisen, auf denen der Adapter auf einem Boden oder Untergrund bewegbar (rollbar) ist. Derartigen Rollen oder Räder können auch direkt an einer Unterseite des Adapters oder auch seitlich am Adapter angeordnet sein. Der Adapter kann außerdem einen Antrieb für die Rollen umfassen, etwa in der Form eines Elektromotors, so dass sich der Adapter (einschließlich oder ohne Ladungsträgeraufbau) selbsttätig auf ein Fahrzeug bewegen kann oder von diesem wieder herunter. In einer solchen Ausführungsform ist der Adapter ein "Fahrerloses Transportsystem (FTS)", das ein Fahrzeug mit Energie und "Intelligenz" (Datenübertragung, -verarbeitung, Ortung) versorgen kann.

In einer weiteren Ausführungsform weist der Adapter eine Hebe/Senkvorrichtung auf zum Anheben und/oder Absenken des Ladungsträgeraufbaus. Ein Anheben des Ladungsträgeraufbaus kann insbesondere einer Vorbereitung für eine Aufnahme des Ladungsträgeraufbaus durch ein Lastaufnahmemittel an einer Unterseite des Ladungsträgeraufbaus dienen, insbesondere durch einen Gabelstapler oder durch einen Niederhubwagen. In einer weiteren Ausführungsform ist vorgesehen, dass durch die Hebe/Senkvorrichtung der Adapter einschließlich des Ladungsträgeraufbaus anhebbar oder absenkbar ist. Insbesondere kann die Hebe/Senkvorrichtung Rollen oder Räder aufweisen, welche an einer Unterseite des Adapters oder seitlich am Adapter angeordnet sind, zum Abrollen des (angehobenen) Adapters. Auf diese Weise ist der Adapter (mit oder ohne Ladungsträgeraufbau) auf einer Ladefläche eines Fahrzeugs rollbar bei einem Beladen oder Entladen des Fahrzeugs. Es kann auch vorgesehen sein, dass die Rollen oder Räder über einen Antrieb des Adapter angetrieben werden können, wie oben beschrieben wurde.

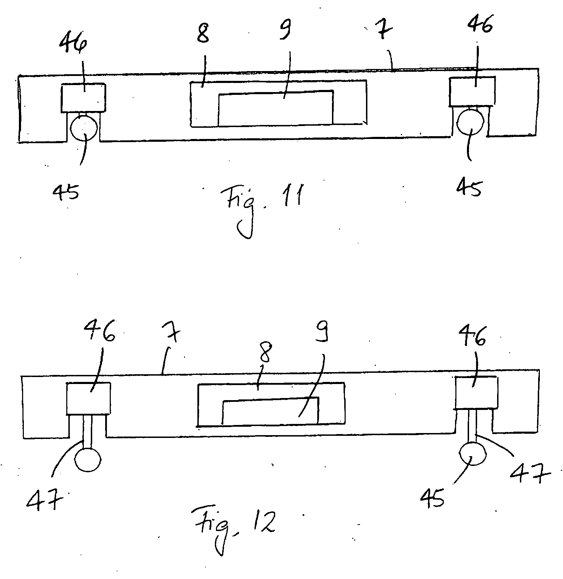

Dabei kann die Hebe/Senkvorrichtung mit einer Hydrauliksystem öder einem Elektromotor ausgestattet sein, welche für eine Energieversorgung mit dem Energiespeicher des Adapters verbunden sein können. Außerdem kann der Adapter eine Drehvorrichtung aufweisen für ein Drehen des Ladungsträgeraufbaus, insbesondere um eine vertikale Drehachse. Auf diese Weise ist der Ladungsträgeraufbau für einen Lade/Entladevorgang besonders günstig positionierbar. Insbesondere wenn der Ladungsträger eine Tür aufweist zum Beladen/Entladen des Ladungsträgers, ist diese durch eine derartige Drehvorrichtung besonders günstig positionierbar. Dabei kann vorgesehen sein, dass die Drehvorrichtung manuell oder mittels eines Antriebsmotors drehbar ist. Es ist ferner möglich, die Drehvorrichtung in die Hebe/Senkvorrichtung zu integrieren, vgl. Figuren 11 und 12.

Viele der Merkmale der genannten Ausführungsformen des erfindungsgemäßen Ladungsträgersystems sind auch vorteilhaft kombinierbar mit einem Ladungsträgersystem, bei dem die Bodengruppe mit dem Ladungsträgeraufbau nicht-lösbar verbunden ist, bei dem die Bodengruppe mit dem Ladungsträgeraufbau beispielsweise verschweißt ist oder auf einer andere stoffschlüssige Weise verbunden ist, oder bei dem die Verbindung zwischen Bodengruppe und Ladungsträgeraufbau nicht für ein einfaches Lösen (bei einem Lade- oder Entladeverfahren) ausgestaltet und bestimmt ist, insbesondere Verbindungen durch ein Verschrauben mittels schwer zugänglicher Schraubverbindungen. So kann beispielsweise auch ein Ladungsträgersystem mit einer in diesem Sinne nicht oder nur schwer lösbaren Verbindung zwischen der Bodengruppe und dem Ladungsträgeraufbau mit den oben genannten Merkmalen, wie beispielsweise Aufnahmen für Lastaufnahmemittel, Schnittstellen für eine Energieübertragung und/oder Datenübertragung, eine Telematikeinheit, ausklappbare oder ausfahrbare Stützbeine (mit oder ohne Rollen) und/oder einer Hebe/Senkvorrichtung (mit oder ohne Rollen) ausgestattet sein zur Erzielung der jeweils beschriebenen Vorteile. Außerdem kann vorgesehen sein, dass die Bodengruppe mehrere verschiedene Verbindungselemente aufweist für eine Verbindbarkeit des Ladungsträgersystems mit unterschiedlichen Fahrzeugen.

Die Erfindung beinhaltet ferner ein Fahrzeugsystem, das ein Fahrzeug, insbesondere ein Elektrofahrzeug, und ein Ladungsträgersystem hier vorgeschlagener Art umfasst, wobei das Fahrzeug eine vierte Verbindungsvorrichtung aufweist, die mit der ersten Verbindungsvorrichtung des Adapters verbindbar ist zum Herstellen einer lösbaren Verbindung zwischen dem Fahrzeug und dem Adapter.

Dabei sind die erste Verbindungsvorrichtung des Adapters und die vierte Verbindungsvorrichtung des Fahrzeugs korrespondierend zueinander ausgestaltet beispielsweise zur Ausbildung einer formschlüssigen und/oder kraftschlüssigen Verbindung zwischen der ersten und vierten Verbindungsvorrichtung. Die genannten Verbindungsvorrichtungen können beispielsweise Verbindungselemente wie Bolzen und Bolzenlasche, Haken und Ösen (wie etwa Container-Transport-Ösen, TCU), als Twistlock und Twistlockaufnahme oder durch andere Verbindungselemente oder durch Kombinationen unterschiedlicher Verbindungselemente umfassen. Dabei können die Verbindungselemente der ersten Verbindungsvorrichtung des Adapters auf einer Unterseite oder auf Seitenflächen des Adapters angeordnet sein. Die Verbindungselemente der vierten Verbindungsvorrichtung des Fahrzeugs können an einem Fahrgestell, auf einer Ladefläche oder an Seitenflächen des Fahrzeugs angeordnet sein. Diese Verbindungselemente können ferner Schienen für ein sicheres Führen und Halten des Adapters und/oder Rollen umfassen, auf denen der Adapter mit einer Unterseite des Adapters abrollbar ist für ein leichteres Beladen oder Entladen des Fahrzeugs mit dem Ladungsträgersystem.

Ein solches Fahrzeugsystem mit einem Ladungsträgersystem hier vorgeschlagener Art hat alle der oben beschriebenen Vorteile des erfindungsgemäßen Ladungsträgersystems. Ferner sind in diesem Fahrzeugsystem alle der oben genannten Ausführungsformen und Weiterentwicklungen des Ladungsträgersystems verwendbar zur Erzielung der jeweils beschriebenen zusätzlichen Vorteile.

So ist insbesondere der Energiespeicher des Ladungsträgersystems über eine Schnittstelle mit einem Energieübertragungssystem des Fahrzeugs und/oder einem Energieübertragungssystem des Ladungsträgeraufbaus verbindbar, beispielsweise zur Energieversorgung eines elektrischen Antriebsmotors des Fahrzeugs, einer Hebe/Senkvorrichtung des Ladungsträgeraufbaus, oder für ein Aufladen des Energiespeichers über eine Lichtmaschine oder einer Rekuperationsbremse des Fahrzeugs. Außerdem können das Fahrzeug sowie der Adapter und/oder der Ladungsträgeraufbau mit Datenschnittstellen ausgestattet sein für eine Datenübertragung zwischen dem Fahrzeug und dem Adapter und/oder dem Ladungsträgeraufbau mit den bereits oben beschriebenen Vorteilen.

In einer bevorzugten Ausführungsform des Fahrzeugsystems ist ein Trägerrahmen des Fahrzeugs, der zum Tragen insbesondere des Ladungsträgersystems vorgesehen ist, als Niederflurrahmen ausgestaltet. Ein solcher Niederflurrahmen zeichnet sich dadurch aus, dass er möglichst flach gebaut ist und in einer möglichst nur geringen Höhe oberhalb eines Untergrundes, auf dem das Fahrzeug steht (Straße etc.), angeordnet ist. Vorzugsweise beträgt eine Höhe des Niederflurrahmens, also der Abstand zwischen einer Oberseite des Niederflurrahmens und dem Untergrund weniger als 0,7 m, besonders bevorzugt weniger als 0,55 m.

Der Niederflurrahmen verläuft vorzugsweise vollständig zwischen den Rädern des Fahrzeugs. Auf diese Weise ist auch der Adapter, wenn er auf dem Niederflurrahmen aufliegt, vollständig oder zumindest teilweise zwischen den Rädern des Fahrzeugs angeordnet. Der Adapter kann beispielsweise in der Form eines Tiefbaurahmens ausgestaltet sein, wodurch im Vergleich zu massiveren Ausführungsformen Gewicht eingespart werden kann. Der Adapter hat vorzugsweise eine so geringer Gesamtbreite (gemessen in Richtung der Radachsen des Fahrzeugs), dass er auf dem Niederflurrahmen quer und/oder längs zu den Radachsen des Fahrzeugs über den Niederflurrahmen hinweg bewegt werden kann, ohne dabei in einen Berührungskontakt mit den Räder zu kommen oder durch diese blockiert zu werden. Zu diesem Zweck ist die Gesamtbreite des Adapters also kleiner als jeweils der Abstand zwischen Rädern (bzw. zwischen zwei Radpaaren) auf den Radachsen des Fahrzeugs. Auf diese Weise ist es beispielsweise zum Austauschen eines Adapters ausreichend, den Ladungsträgeraufbau von dem Adapter zu lösen sowie anzuheben und anschließend den Adapter quer oder längs zu den Radachsen zwischen dem Niederflurrahmen und dem angehobenen Ladungsträgeraufbau heraus zu bewegen. Danach kann ein weiterer (Austausch-)Adapter zwischen den Niederflurrahmen und den weiterhin angehobenen Ladungsträgeraufbau platziert werden, indem der Adapter quer oder längs zu den Radachsen zwischen den Niederflurrahmen und den angehobenen Ladungsträgeraufbau bewegt wird, der Ladungsträgeraufbau dann auf den Adapter abgesetzt und mit diesem verbunden wird.

Zum Bewegen des Adapters relativ zu dem Fahrzeug quer oder längs zu den Radachsen können beispielsweise Rollbahnen an dem Fahrzeug bzw. dem Niederflurrahmen, an dem Adapter und/oder an dem Ladungsträgeraufbau angeordnet sein. Diese Rollbahnen können in einer bevorzugten Ausführungsform mittels mindestens eines Antriebmoduls, beispielsweise mittels eines Winkelgetriebes und einer Exzenterwelle, angetrieben werden zum automatischen Bewegen des Adapters, wobei das Antriebsmodul vorzugsweise an dem Fahrzeug bzw. an dem Niederflurrahmen befestigt ist. Außerdem kann mittels auf einer Oberseite des Adapters angeordneten (und ggf. mittels eines Antriebsmoduls antreibbaren) Rollbahnen auch der Ladungsträgeraufbau relativ zum Adapter (automatisch) bewegt werden zum Entladen oder Beladen des Fahrzeugsystems ohne gleichzeitigen Austausch des Adapters. Zu diesem Zweck ist es vorteilhaft, wenn, wie weiter unten beschrieben wird, der Ladungsträgeraufbau vollständig oberhalb der Räder des Fahrzeugs angeordnet ist, so dass beim Bewegen (bzw. Abrollen) des Ladungsträgeraufbaus quer oder längs zu den Radachsen Berührungskontakte zwischen dem Ladungsträgeraufbau und den Rädern des Fahrzeugs vermieden werden können, ohne dass zum Vermeiden derartiger Kontakte der Ladungsträgeraufbau angehoben werden müsste.

Der Niederflurrahmen kann beispielsweise als Fahrgestell des Fahrzeugs ausgestaltet sein. Es kann vorgesehen sein, dass die Radachsen durch den Niederflurrahmen hindurch verlaufen. Der Niederflurrahmen kann beispielsweise als Leiterrahmen, Rohrrahmen oder in einer anderen, möglichst flachbauenden Form konstruiert sein.

Mittels des besonders flachen und niedrig angeordneten Niederflurrahmens wird ein besonders niedriger Schwerpunkt des Fahrzeugsystems und eine nur geringe Ladehöhe des Fahrzeugsystems erzielt. Unter der Ladehöhe des Fahrzeugsystems soll der Abstand zwischen einer Unterseite des Ladungsträgeraufbaus des Fahrzeugsystems und dem Boden bzw. der Straße, auf dem/der das Fahrzeug steht, bezeichnet werden. Vorzugsweise beträgt die Ladehöhe weniger als 1,1 m, besonders bevorzugt weniger als 0,95 m.

Die möglichst niedrige Höhe des Niederflurrahmens hat außerdem den wichtigen Vorteil, dass der Adapter eine relativ große Bauhöhe aufweisen kann, ohne dass die Ladehöhe und der Schwerpunkt des Ladungsträgersystems zu hoch angeordnet sind. Ein Adapter mit einer besonders großen Bauhöhe, beispielsweise zwischen 0,3 m bis 0,5 m, eignet sich zur Aufnahme von besonders großen bzw. von besonders vielen Energiespeichern in den Adapter, so dass mit einem solchen Adapter insgesamt eine besonders große Energiemenge aufgenommen werden kann. Außerdem können auch solche Energiespeicher in einen solchen Adapter aufgenommen werden, welche ihrerseits eine große Bauhöhe aufweisen und nur stehend verwendet werden können.

Vorzugsweise ist die Bauhöhe des Adapters so groß, dass der Ladungsträgeraufbau, wenn dieser auf dem Adapter aufgesetzt ist, vollständig oberhalb der Räder des Fahrzeugs angeordnet ist. Auf diese Weise müssen in dem Ladungsträgeraufbau keine Aussparungen bzw. Radkästen für die Räder vorgesehen werden, welche eine Ladekapazität des Ladungsträgeraufbaus reduzieren könnten. Außerdem kann der Ladungsträgeraufbau dann eine größere Gesamtbreite als der Adapter aufweisen ohne in einen kontakt mit den Rädern zu kommen und somit ein besonders großes Ladevolumen beinhalten. Die Gesamtbreite des Ladungsträgeraufbaus ist dann vorzugsweise etwa so groß wie eine Gesamtbreite des Fahrzeugs.

Ein weiterer Vorteil einer möglichst niedrige Höhe des Niederflurrahmens besteht darin, dass ein relativ niedriger Schwerpunkt und eine relativ niedrige Ladehöhe des Fahrzeugsystems selbst dann noch realisierbar sind, wenn zwischen dem Niederflurrahmen und dem Ladungsträgeraufbau mehrere Adapter übereinander gestapelt werden, wie bereits oben beschrieben wurde.

Der Antriebsmotor des Fahrzeugs kann an Trägern bzw. an Rohren des Niederflurrahmens befestigt sein und beispielsweise zwischen diesen Trägern bzw. Rohren angeordnet sein. Ebenso wie der Antriebsmotor können auch ein Antriebsgetriebe des Fahrzeugs sowie Energiespeicher des Fahrzeugs an dem Niederflurrahmen befestigt und/oder beispielsweise zwischen Trägern bzw. Rohren des Niederflurrahmens angeordnet sein. Für die Energiespeicher des Fahrzeugs, die also zusätzlich zu den Energiespeichern des Adapters vorgesehen sind, kommen die gleichen Ausführungsformen in Frage, die bereits weiter oben für die Energiespeicher des Adapters genannt worden sind. Vorzugsweise sind die Energiespeicher des Fahrzeugs ebenfalls mit einem oben beschriebenen Energieübertragungssystems des Fahrzeugs verbunden zur Energieversorgung von Verbrauchern im Fahrzeug, insbesondere des Antriebmotors. Es kann auch vorgesehen sein, dass die Energiespeicher des Fahrzeugs zur Energieversorgung von Verbrauchern des Ladungsträgersystems verwendet werden, wie beispielsweise von Kühlaggregaten oder anderen Verbrauchern. Außerdem ist es möglich, über das Energieübertragungssystem die Energiespeicher des Fahrzeugs mittels der Energiespeicher des Adapters aufzuladen.

In einer Ausführungsform des Fahrzeugsystems umfasst der Ladungsträgeraufbau eine fünfte Verbindungsvorrichtung und umfasst außerdem das Fahrzeug eine sechste Verbindungsvorrichtung, welche korrespondierend zu der fünften Verbindungsvorrichtung ausgestaltet ist zur Herstellung einer lösbaren Verbindung zwischen dem Ladungsträgeraufbau und dem Fahrzeug. Zum einen lässt sich auf diese Weise eine besonders sichere Verbindung zwischen dem Fahrzeug und dem Ladungsträgeraufbau erzielen. Ferner können die erste, zweite, dritte und vierte Verbindungsvorrichtung beispielsweise als Rollbahnen oder Gleitschienen bzw. als korrespondierende Aufnahmen oder Gleitflächen ausgestaltet sein, die vorzugsweise Führungen aufweisen für eine mechanische Stabilisierung quer zur bevorzugten Rollrichtung oder Gleitrichtung. Dann wird der Fahrzeugträgeraufbau alleine über die fünfte und die sechste Verbindungsvorrichtung an dem Fahrzeug kraft- und/oder formschlüssig befestigt. Zum Laden bzw. Entladen des Fahrzeugs muss dann vorteilhafterweise lediglich die fünfte und die sechste Verbindungsvorrichtung gelöst werden, wodurch ein besonders schnelles Laden und Entladen des Fahrzeugs ermöglicht wird. Für die fünfte und die sechste Verbindungsvorrichtung kommen zur Herstellung einer formschlüssigen und/oder kraftschlüssigen Verbindung zwischen dem Ladungsträgeraufbau und dem Fahrzeug beispielsweise die bereits oben genannten Beispiele in Frage (z.B. Bolzen und Bolzenlasche, Haken und Ösen (wie etwa Container-Transport-Ösen, TCU), Twistlock und Twistlockaufnahme). In einer Weiterentwicklung ist zudem vorgesehen, dass die fünfte Verbindungsvorrichtung und die sechste Verbindungsvorrichtung zur Übertragung von Energie und/oder von Daten zwischen Fahrzeug und Ladungsträgeraufbau eingerichtet sind, so dass mit dem Laden bzw. Entladen gleichzeitig eine Verbindung zur Daten- und/oder Energieübertragung zwischen Ladungsträgeraufbau und Fahrzeug hergestellt bzw. gelöst wird. Ebenso ist es möglich, die erste und die zweite Verbindungsvorrichtung und/oder die dritte und die vierte Verbindungsvorrichtung zur Übertragung von Energie und/oder von Daten zwischen Adapter und Ladungsträgeraufbau bzw. zwischen Fahrzeug und Adapter einzurichten. Zu diesem Zweck können die jeweiligen Verbindungsvorrichtungen entsprechend ausgestaltete Daten- bzw. Energieschnittstellen umfassen, wie etwa Steck- oder Induktionselemente.

Die Erfindung umfasst schließlich ein Verfahren für ein Beladen eines Fahrzeugsystems hier vorgeschlagener Art, bei dem zuerst der Adapter des Ladungsträgersystems mit dem Fahrzeug verbunden wird und danach der Ladungsträgeraufbau des Ladungsträgersystems mit dem Adapter verbunden wird oder bei dem zuerst der Ladungsträgeraufbau mit dem Adapter verbunden wird und danach der Adapter mit dem Fahrzeug verbunden wird. Beim Verbinden des Adapters mit dem Fahrzeug wird der Adapter zunächst auf das Fahrzeug aufgesetzt (beispielsweise auf ein Fahrgestell oder eine Ladefläche des Fahrzeugs) und anschließend ein lösbare Verbindung mittels der ersten Verbindungsvorrichtung des Adapters und der vierten Verbindungsvorrichtung des Fahrzeugs hergestellt. Beim Verbinden des Ladungsträgeraufbaus mit dem Adapter wird der Ladungsträgeraufbau zunächst auf den Adapter aufgesetzt und anschließend eine lösbare Verbindung zwischen dem Adapter und dem Ladungsträgeraufbau mittels der zweiten Verbindungsvorrichtung des Adapters und der dritten Verbindungsvorrichtung des Ladungsträgeraufbaus hergestellt.

Bei Bedarf, etwa für ein Austauschen des Energiespeichers, kann der Adapter natürlich auch unabhängig von dem Ladungsträgeraufbau ausgetauscht werden. Dazu wird die Verbindung zwischen dem Adapter und dem Ladungsträgeraufbau gelöst, der Ladungsträgeraufbau angehoben, die Verbindung zwischen dem Adapter und dem Fahrzeug gelöst und schließlich der Adapter zwischen dem Fahrzeugs und dem Ladungsträgeraufbau entfernt und durch einen anderen Adapter ersetzt. Danach wird der Ladungsträgeraufbau auf diesen Adapter abgesetzt und die Verbindungen zwischen dem Adapter und dem Fahrzeug und dem Ladungsträgeraufbau hergestellt.

Die Erfindung beinhaltet außerdem ein Verfahren für ein Entladen eines Fahrzeugsystems hier vorgeschlagener Art, bei dem zuerst der Adapter des Ladungsträgersystems von dem Fahrzeug gelöst wird und danach der Ladungsträgeraufbau des Ladungsträgersystems von dem Adapter gelöst wird oder bei dem zuerst der Ladungsträgeraufbau von dem Adapter gelöst wird und danach der Adapter von dem Fahrzeug gelöst wird. Beim Lösen des Adapters von dem Fahrzeug wird zunächst eine lösbare Verbindung zwischen der ersten Verbindungsvorrichtung des Adapters von der vierten Verbindungsvorrichtung des Fahrzeugs gelöst und der Adapter anschließend von dem Fahrzeug entfernt. Beim Lösen des Ladungsträgeraufbaus von dem Adapter wird zunächst eine lösbare Verbindung zwischen der zweiten Verbindungsvorrichtung des Adapters und der dritten Verbindungsvorrichtung des Ladungsträgeraufbaus gelöst und anschließend der Ladungsträgeraufbau von dem Adapter entfernt.

Bei Bedarf kann der Adapter beim Entladen des Fahrzeugs natürlich auch wahlweise an dem Fahrzeug oder an dem Ladungsträgeraufbau verbleiben. Ein Verbleib an dem Fahrzeug ist insbesondere dann vorteilhaft, wenn ein Wechsel des Energiespeichers nicht erforderlich ist, etwa weil ein Ladestand des Energiespeichers ausreichend hoch ist für eine weitere Energieversorgung etwa eines elektrischen Antriebmotors des Fahrzeugs. Dies ist insbesondere häufig im innerstädtischen Ladungstransport vorteilhaft, bei dem typische Transportstrecken in der Regel kleiner sind als eine Reichweite des Energiespeichers. Dahingegen kann ein Verbleib des Adapters an dem Ladungsträgeraufbau vorteilhaft sein, wenn Adapter als eine stabilisierende und tragende Bodengruppe ausgestaltet ist und der Ladungsträgeraufbau in einer weniger stabilen Leichtbauweise gefertigt ist.

In Ausführungsformen der hier vorgeschlagenen Verfahren zum Beladen oder Entladen des Fahrzeugsystems ist vorgesehen, dass der Ladungsträgeraufbau mittels einer in dem Adapter integrierten Hebe/Senkvorrichtung abgesenkt oder angehoben wird. Dabei kann vorgesehen sein, dass der Adapter zusammen mit dem Ladungsträgeraufbau abgesenkt oder angehoben wird. Auf diese Weise kann ein Entladen oder Beladen des Fahrzeugs vereinfacht und beschleunigt werden, insbesondere dann, wenn das Ladungsträgersystem von einer Unterseite des Adapters (beziehungsweise des Ladungsträgeraufbaus) durch ein Lastaufnahmemittel aufgenommen wird.

In weiteren Ausführungsformen der hier vorgeschlagenen Verfahren zum Beladen oder Entladen des Fahrzeugsystems ist ferner vorgesehen, dass das Ladungsträgersystem an Aufnahmen des Ladungsträgersystems durch ein Lastenaufnahmemittel, insbesondere einem Gabelstapler oder einem Kran, aufgenommen und auf das Fahrzeug abgesetzt oder von dem Fahrzeug entfernt wird. Als Lastaufnahmemittel werden typischerweise Gabelstapler, Niederhubwagen, Sicherheitshebelroller oder Krane (mit oder ohne Greifarme) eingesetzt. Insbesondere bei einem Einsatz eines Krans mit Halteseilen zur Aufnahme des Adapters hat der Adapter die Funktion einer Traverse zur Verteilung einer Last auf mehrere Aufnahmebereiche (Aufnahmen), an denen der Adapter von dem Kran aufgenommen wird.

In einer Weiterentwicklung des Verfahrens ist vorgesehen, dass Daten mindestens eines Fahrzeugsystems hier vorgeschlagener Art oder eines oder mehrerer Komponenten eines solchen Systems (d.h. des Fahrzeugs, des Ladungsträgersystems, eines oder mehrerer Adapter, des Ladungsträgersaufbaus des Systems) über mindestens eine Telematik/Lokalisierungseinheit des Fahrzeugsystems und/oder der Komponenten an ein lokales elektronisches Energiemanagementsystem gesendet werden. Die Daten können Identifikationscodes und Positionsdaten des Fahrzeugsystems und/oder der Komponente(n) des Systems umfassen sowie außerdem auch die aktuellen Ladestände von Energiespeichern des bzw. der Adapter des Systems und/oder aktuelle Informationen über in dem Ladungsträgeraufbau enthaltenes Transportgut (insbesondere Temperatur). Die Datenübertragung kann beispielsweise via Funk erfolgen.

Die genannten Daten werden von dem Energiemanagementsystem empfangen und verarbeitet. Anhand der Daten können mit dem Energiemanagementsystem beispielsweise dynamische Fahrtrouten für das mindestens eine Systeme berechnet werden beispielsweise unter Berücksichtigung geplanter Lieferpositionen und Lieferzeiten, aktueller Ladestände und/oder dem Zustand des Transportguts. Insbesondere kann die Fahrtroute auch so geplant werden, dass entlang der Strecke zur Energieversorgung des Fahrzeugsystems Zwischenstationen angefahren werden, an denen ein Wechsel, ein Abladen oder ein Zuladen und/oder ein Stapeln von Adaptern am Fahrzeugsystem vorgenommen werden mit oder ohne einem Laden, Beladen, Entladen des Ladungsträgeraufbaus. Auf diese Weise kann die Energieversorgung derartiger System entlang von Fahrtrouten bzw. Transportstrecken gesichert werden. Auch kann zwischen den einzelnen Zwischenstationen und dem Energiemanagementsystem ein Datenaustausch bezüglich in den Zwischenstationen lokal gelagerter Komponenten von Systemen vorgeschlagener Art durchgeführt werden, also insbesondere über die Ladestände der Energiespeicher der lokal gelagerten Adapter.

Die durch das Energiemanagementsystem berechneten Fahrtrouten werden anschließend an die Telematik/Lokalisierungseinheit des betreffenden Fahrzeugsystems, der betreffenden Komponente bzw. an die betreffende Zwischenstation gesendet und dort weiterverarbeitet. Beispielsweise kann ein Fahrer des Fahrzeugsystems anhand einer Anzeige über die berechnete Fahrtroute und die anzufahrenden Zwischenstationen informiert werden. Die Erfindung eignet sich also zum Aufbau bzw. zur Integration in ein Verkehrstelematik-System (Intelligent Transport System).

Im Folgenden werden spezielle Ausführungsformen der Erfindung anhand von Figuren 1 bis 14 näher erläutert. Es zeigt:
- Figur 1:: einen Querschnitt durch ein Fahrzeugsystem hier vorgeschlagener Art mit einem Ladungsträgersystem hier vorgeschlagener Art,
- Figur 2:: einen Adapter eines Ladungsträgersystems hier vorgeschlagener Art mit Aufnahmen für Zinken eines Niederhubwagens,
- Figur 3:: einen Querschnitt durch einen Adapter eines Ladungsträgersystems hier vorgeschlagener Art mit einem Energiespeicher,
- Figur 4:: einen Adapter eines Ladungsträgersystems hier vorgeschlagener Art mit Aufnahmen für verschiedene Lastaufnahmemittel in einer Ansicht von hinten,
- Figur 5:: einen Adapter eines Ladungsträgersystems hier vorgeschlagener Art mit Aufnahmen für verschiedene Lastaufnahmemittel in einer Seitenansicht,
- Figur 6:: ein Verfahren hier vorgeschlagener Art zum Beladen und Entladen eines Fahrzeugsystems hier vorgeschlagener Art mit einem Gabelstapler,
- Figur 7:: ein Verfahren hier vorgeschlagener Art zum Beladen und Entladen eines Fahrzeugsystems hier vorgeschlagener Art mit einem Niederhubwagen,
- Figur 8:: eine weitere Ausführungsform des in Figur 7 gezeigten Verfahrens,
- Figur 9:: ein Verfahren hier vorgeschlagener Art zum Beladen und Entladen eines Fahrzeugsystems hier vorgeschlagener Art mit einem Sicherheitshebelroller,
- Figur 10:: ein Verfahren hier vorgeschlagener Art zum Beladen und Entladen eines Fahrzeugsystems hier vorgeschlagener Art mit einer Hebe/Senkvorrichtung,
- Figur 11:: einen Querschnitt durch einen Adapter eines Ladungsträgersystems hier vorgeschlagener Art mit einer Hebe/Senkvorrichtung,
- Figur 12:: den in Figur 11 gezeigten Adapter mit ausgefahrenen Stützbeinen,
- Figur 13:: ein Fahrzeugsystem hier vorgeschlagener Art mit einem Stapel von Adaptern hier vorgeschlagener Art,
- Figur 14:: ein Fahrzeugsystem mit einer in einem Ladungsträgeraufbau integrierten Bodengruppe und,
- Figur 15:: ein Fahrzeugsystem hier vorgeschlagener Art mit einem als Niederflurrahmen ausgestalteten Fahrgestell in einer Seitenansicht,
- Figur 16:: ein Fahrzeugsystem hier vorgeschlagener Art mit einem als Niederflurrahmen ausgestalteten Fahrgestell in einer Rückansicht,
- Figur 17:: ein Fahrzeug eines Fahrzeugsystems hier vorgeschlagener Art,
- Figur 18:: ein Fahrzeugsystem hier vorgeschlagener Art mit einem als Niederflurrahmen ausgestalteten Fahrgestell,
- Figur 19:: einen Ausschnitt eines Fahrzeugsystems hie vorgeschlagener Art und
- Figur 20:: ein Fahrzeugsystem hier vorgeschlagener Art mit einer fünften und einer sechsten Verbindungsvorrichtung.

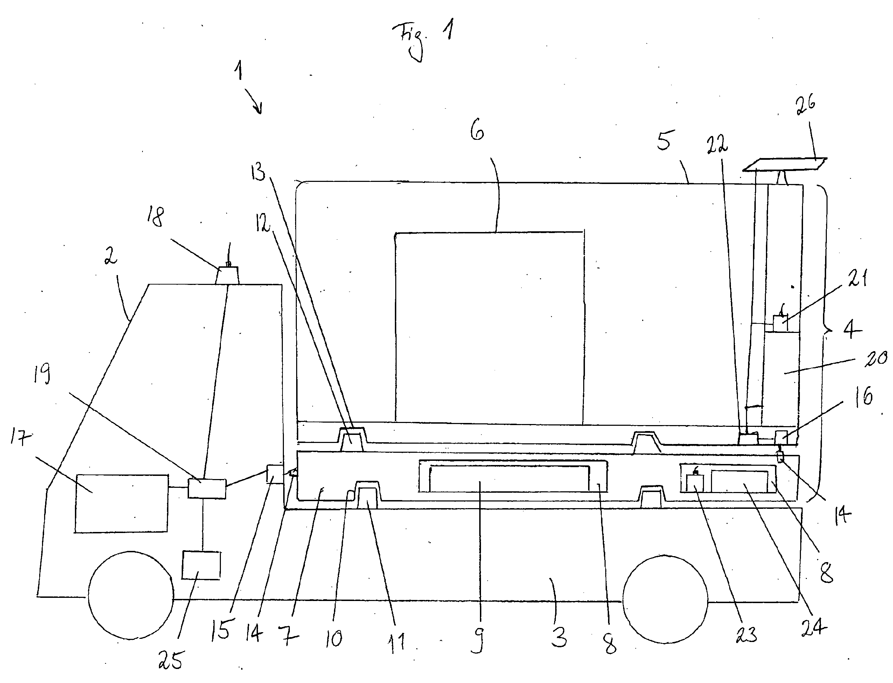

In Figur 1 ist ein Querschnitt durch ein Fahrzeugsystem 1 hier vorgeschlagener schematisch dargestellt. Das Fahrzeugsystem umfasst ein Fahrzeug 2, auf dessen Fahrgestell 3 ein Ladungsträgersystem 4 hier vorgeschlagener Art angeordnet ist. Das Ladungsträgersystem 4 umfasst einen Ladungsträgeraufbau 5, der ein Transportgut 6 beinhaltet, sowie eine als Adapter 7 ausgestaltete Bodengruppe. Dieser Adapter 7 weist Hohlräume 8 auf, die einen Energiespeicher 9 beinhalten. Der Adapter weist auf einer Unterseite eine erste Verbindungsvorrichtung 10 auf, die mit einer vierten Verbindungsvorrichtung 11 des Fahrgestells 3 lösbar verbunden ist. Außerdem weist der Adapter 7 eine zweite Verbindungsvorrichtung 12 auf, die mit einer dritten Verbindungsvorrichtung 13 des Ladungsträgeraufbaus lösbar verbunden ist. Der Adapter ist mit zwei Schnittstellen 14 ausgestattet, von denen eine mit einer Schnittstelle 15 verbunden ist und wobei die zweite Schnittstelle 14 mit einer Schnittstelle 16 des Ladungsträgeraufbaus verbunden ist zur Übertragung von Energie zwischen dem Energiespeicher 9 und dem Fahrzeug 2 sowie zwischen dem Energiespeicher 9 und dem Ladungsträgeraufbau 5.

Zur Energieübertragung an verschiedene Verbraucher in dem Fahrzeug 2, einem Elektromotor 17 sowie einer Telematik/Lokalisierungseinheit 18, sind diese mit einer Energieübertragungseinheit 19 verbunden, welche wiederum mit der (Energie-)Schnittstelle 15 des Fahrzeugs verbunden ist, welche als eine Induktionsverbindung ausgestaltet ist. Analog sind zur Energieübertragung an verschiedene Verbraucher in dem Ladungsträgeraufbau 5, einem Kühlaggregat 20 sowie einer Telematik/Lokalisierungseinheit 21, diese mit einer Energieübertragungseinheit 22 des Ladungsträgeraufbaus 5 verbunden, welche wiederum mit der (Energie-)Schnittstelle 16 des Ladungsträgeraufbaus 5 verbunden ist.

Der Adapter 7 weist in einem weiteren Hohlraum 8 eine Telematik/Lokalisierungseinheit 23 auf, welche ebenso wie die Telematik/ Lokalisierungseinheiten 18 und 21 des Fahrzeugs 2 und des Ladungsträgeraufbaus 5 über Funk-Sender/Empfängereinheiten als Datenschnittstellen verfügen. Über diese Datenschnittstellen ist ein Datenaustausch mit einem stationären Energiemanagementsystem herstellbar (nicht abgebildet).

Dieser Datenaustausch betrifft GPS-Positionsdaten und Identifizierungscodes der einzelnen Komponenten des Fahrzeugsystems 1 (d.h. des Fahrzeugs 2, des Adapters 7 und des Ladungsträgersaufbaus 5) an das Energiemanagementsystem. Die Daten umfassen außerdem den aktuellen Ladestände des Energiespeichers 9 des Adapter 7 sowie aktuelle Informationen über das im Ladungsträgeraufbau 5 enthaltenes Transportgut 6, insbesondere der Temperatur innerhalb des Ladungsträgeraufbaus 5. Die Datenübertragung erfolgt über die FunkSender/Empfängereinheiten der Telematik/Lokalisierungseinheit 18, 21 und 23.

Die genannten Daten werden von dem Energiemanagementsystem empfangen und verarbeitet. Anhand der Daten wird mit dem Energiemanagementsystem eine dynamische Fahrtroute für das System 1 berechnet unter Berücksichtigung geplanter Lieferpositionen und Lieferzeiten, des aktuellen Ladestands und dem Zustand des Transportguts. Die Fahrtroute wird ferner so geplant, dass entlang der Strecke zur Energieversorgung des Fahrzeugsystems Zwischenstationen angefahren werden, an denen ein Wechsel, ein Abladen oder ein Zuladen und/oder ein Stapeln von Adaptern am Fahrzeugsystem vorgenommen wird mit oder ohne einem Laden, Beladen, Entladen des Ladungsträgeraufbaus 5.

Die durch das Energiemanagementsystem berechneten Fahrtrouten werden anschließend an die Telematik/Lokalisierungseinheiten 18, 21 und 23 sowie an die betreffende Zwischenstation gesendet und dort weiterverarbeitet. Außerdem wird ein Fahrer des Fahrzeugsystems 1 anhand einer Anzeige über die berechnete Fahrtroute und die anzufahrenden Zwischenstationen informiert.

Das Fahrzeug 2 weist eine Rekuperationsbremse 25 auf zum Aufladen des Energiespeichers 9 über das Energieübertragungssystem 19 des Fahrzeugs 2 und die Schnittstellen 14 und 15. Zum gleichen Zweck weist der Ladungsträgeraufbau ein Solarzellenmodul 26 auf zum Aufladen des Energiespeichers 9 über das Energieübertragungssystem 22 des Ladungsträgeraufbaus 5 und die Schnittstellen 14 und 16.

Die gezeigten Schnittstellen 14, 15, und 16 zur Übertragung von Energie sind in diesem Beispiel als Induktionsschnittstellen ausgeführt für eine kontaktlose induktive Stromübertragung zwischen diesen Schnittstellen 14, 15 und 16. Die Schnittstellen 14, 15 und 16 zeichnen sich somit im Vergleich zu vielen anderen Schnittstellen, wie beispielsweise Steckverbindungen, durch einen besonders geringen Verschleiß aus.

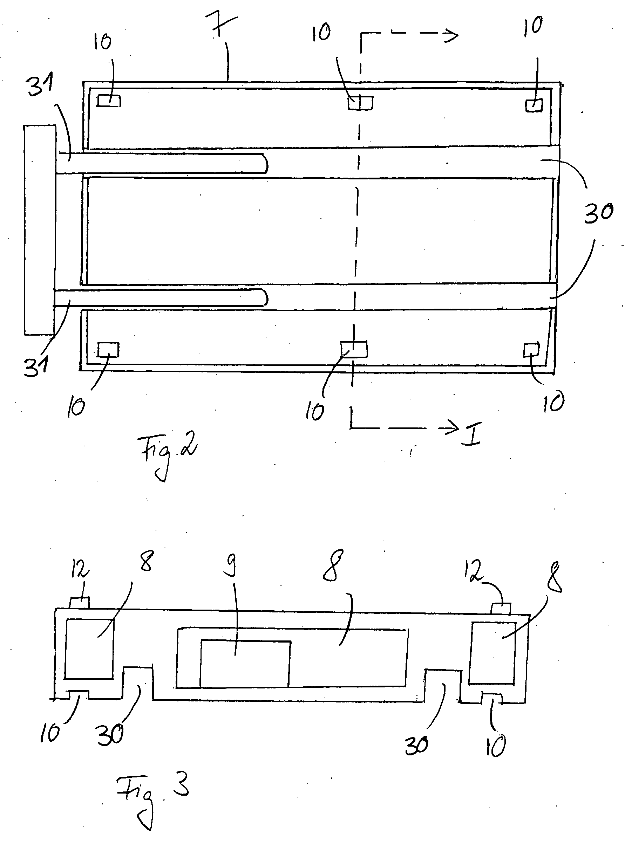

In Figur 2 ist ein Adapter 7 eines Ladungsträgersystems hier vorgeschlagener Art in einer Ansicht von unten schematisch dargestellt. Außer einer ersten Verbindungsvorrichtung 10, welche sechs als Zapfenaufnahmen ausgestaltete Verbindungselemente umfasst, sind ferner Aufnahmen 30 für Zinken 31 eines Niederhubwagens vorgesehen. In Figur 3 ist ein Querschnitt I durch diesen Adapter schematisch dargestellt. Es sind Hohlräume 8 zu erkennen, welche einen Energiespeicher 9 beinhalten. Ferner ist auf einer Oberseite des Adapters 7 eine zweite Verbindungsvorrichtung 12 vorgesehen, welche als Zapfen ausgeformte Verbindungselemente umfasst.

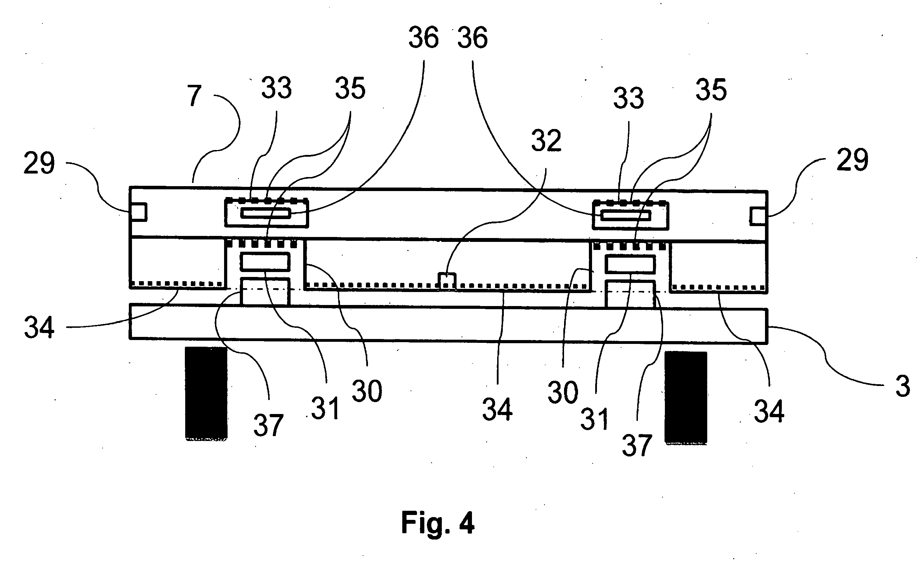

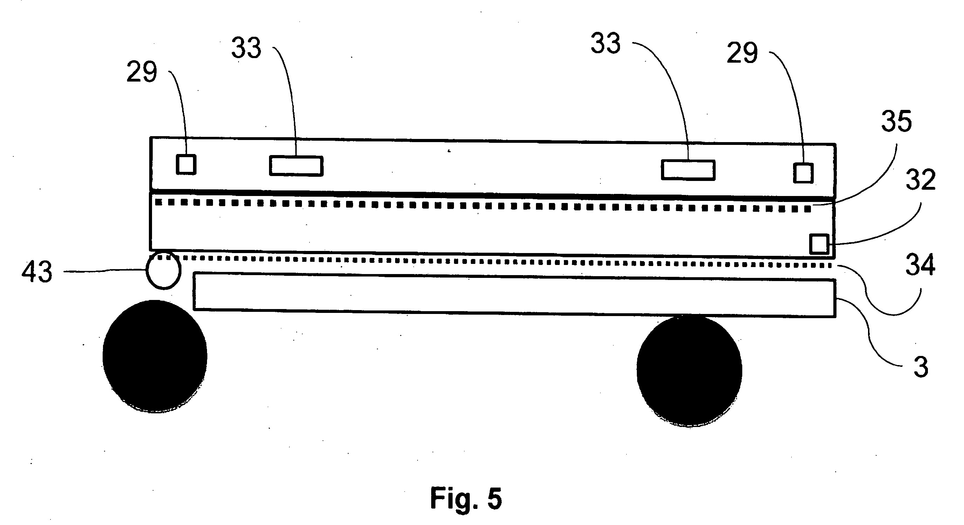

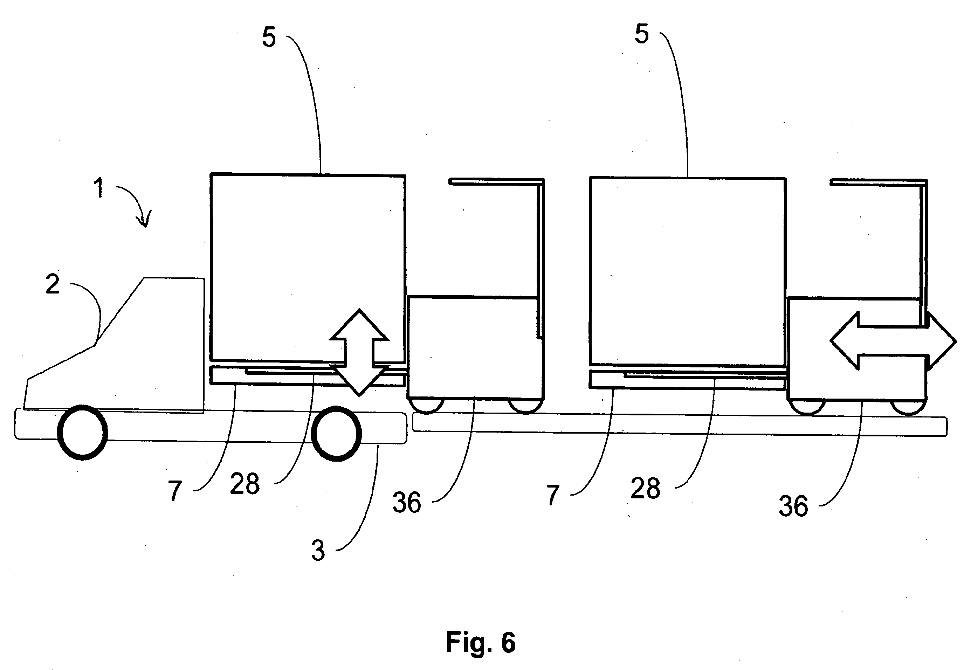

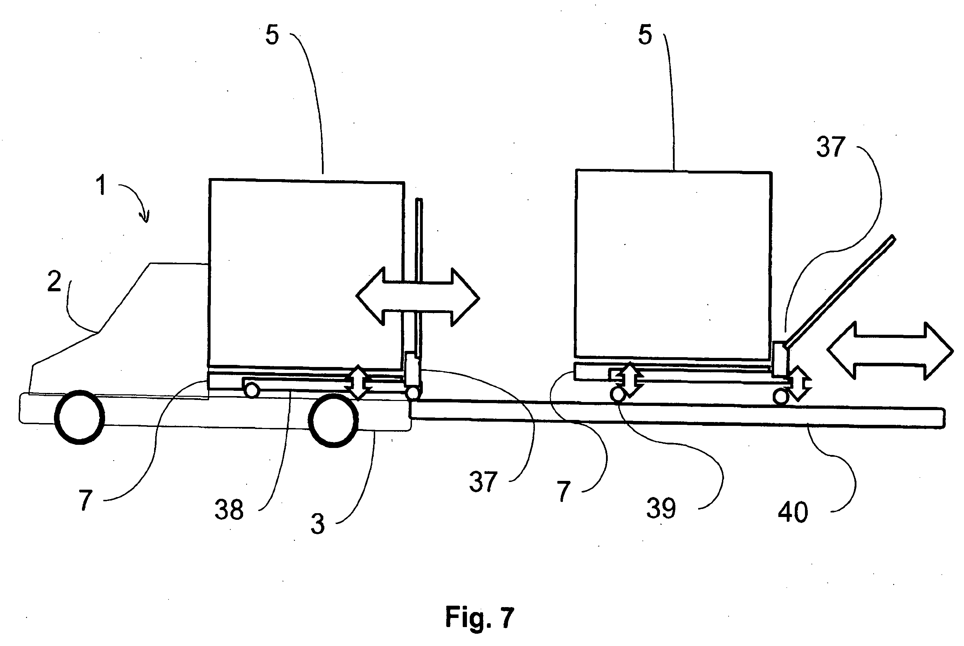

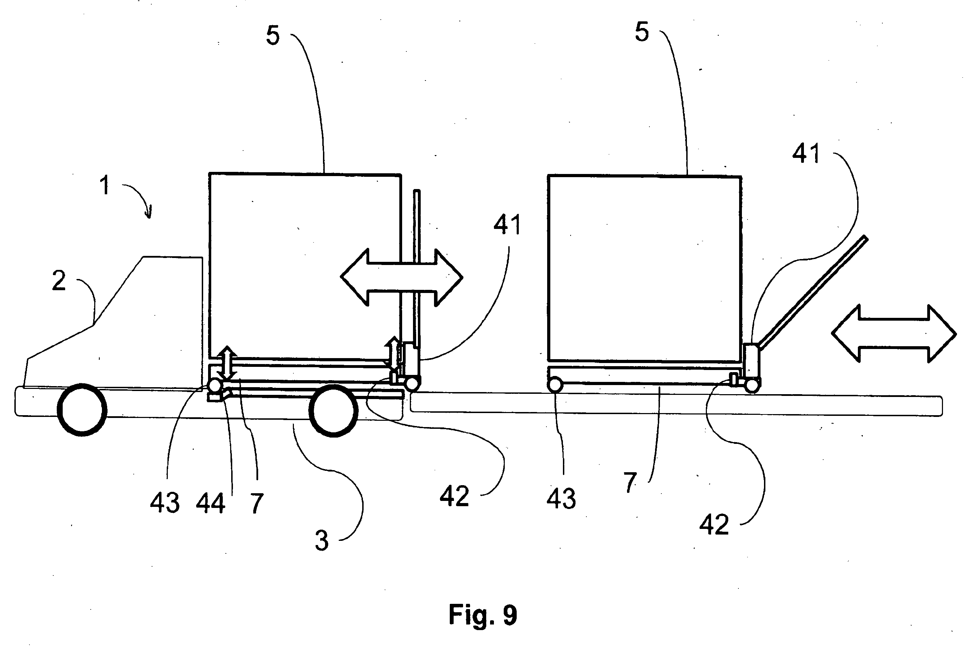

In Figuren 4 und 5 ist wiederum ein Adapter 7 eines Ladungsträgersystems hier vorgeschlagener Art in einer Ansicht von hinten (Figur 4) und in einer Seitenansicht (Figur 5) schematisch dargestellt. Der Adapter 7 ist auf ein Fahrgestell 3 eines Fahrzeugs 2 aufgesetzt und weist mehrere Aufnahmen (Aufnahmebereiche) für Lastaufnahmemittel auf. So sind etwa in Figur 4 Aufnahmebereiche 29 für einen Kran, Aufnahmebereiche 30 für Zinken 31 eines Hubwagens (vgl. Figur 7), Aufnahmebereiche 32 für einen Sicherheitshebelroller (vgl. Figur 9), Aufnahmebereiche für einen Gabelstapler 33 (vgl. Figur 6), Auflageflächen ohne seitliche Führung 34 für einen angetriebenen oder nicht angetriebenen Förderer und Auflageflächen 35 mit seitlicher Führung für einen angetriebenen oder nicht angetriebenen Förderer 31 (beispielsweise ein Hubwagen). Dabei sind die Aufnahmebereiche 30 für den Hubwagen nach unten offen, da Zinken eines (Nieder- )Hubwagens häufig an einer Unterseite Rollen aufweisen, vgl. Figur 7, und somit ein Abrollen des Hubwagens über einen Untergrund ermöglicht wird. Ferner weist der Adapter eine Panzerrolle 43 auf zum Abrollen des Adapters 7 über das Fahrgestell 3, insbesondere bei einer Aufnahme des Adapters mit einem Sicherheitshebelroller, vgl. Figur 9.

Anhand der Figuren 6 bis 12 werden die hier vorgeschlagenen Verfahren zum Beladen und zum Entladen eines Fahrzeugsystems hier vorgeschlagener Art näher beschrieben.

In Figur 6 ist eine Ausführungsform des hier vorgeschlagenen Verfahrens zum Be- und Entladen eines Fahrzeugsystems 1 hier vorgeschlagener Art beschrieben. Dabei werden zum Beladen des Fahrzeugs 2 mit einem Gabelstapler 36 Zinken 28 des Gabelstaplers 36 in entsprechende Aufnahmebereiche des Adapters eingeführt, der Adapter 7 mit dem Ladungsträgeraufbau 5 angehoben und auf ein Fahrgestell 3 des Fahrzeugs 2 abgesetzt. Analog werden beim Entladen des Fahrzeugs 2 mit dem Gabelstapler 36 die Zinken 28 des Gabelstaplers 36 in entsprechende Aufnahmen des Adapters 7 eingeführt, der Adapter 7 mit dem Ladungsträgeraufbau 5 von dem Fahrgestell 3 des Fahrzeugs 2 angehoben, wobei gleichzeitig automatisch eine Verriegelung zwischen dem Adapter 7 und dem Fahrgestell 3 gelöst wird. Anschließend wird der Adapter 7 mit dem Ladungsträgeraufbau 5 von dem Fahrzeug entfernt.

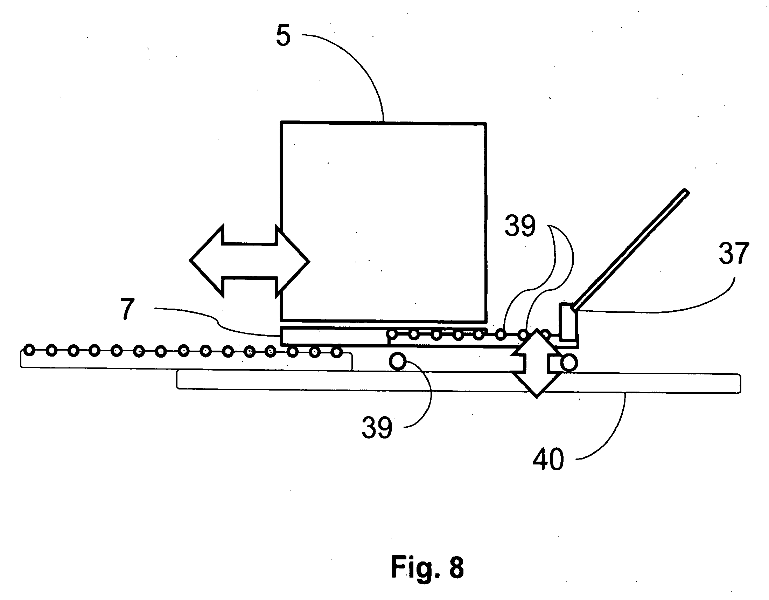

In Figur 7 ist eine weitere Ausführungsform des hier vorgeschlagenen Verfahrens zum Be- und Entladen eines Fahrzeugsystems 1 hier vorgeschlagener Art beschrieben. Dabei werden zum Beladen des Fahrzeugs 2 mit einem Niederhubwagens 37 Zinken 38 des Niederhubwagens 37 in entsprechende nach unten offene Aufnahmebereiche des Adapters 7 eingeführt, der Adapter 7 mit dem Ladungsträgeraufbau 5 angehoben, auf ein Fahrgestell 3 des Fahrzeugs 2 gesetzt und eine lösbare Verbindung zwischen dem Adapter 7 und dem Fahrgestell 3 hergestellt. Analog werden beim Entladen des Fahrzeugs 2 mit dem Niederhubwagens 37 die Zinken 38 des Niederhubwagens 37 in entsprechende Aufnahmen des Adapters 3 eingeführt, der Adapter 7 mit dem Ladungsträgeraufbau 5 von dem Fahrgestell 3 des Fahrzeugs 2 angehoben, wobei gleichzeitig automatisch eine Verriegelung zwischen dem Adapter 7 und dem Fahrgestell 3 gelöst wird. Anschließend wird der Adapter 7 mit dem Ladungsträgeraufbau 5 von dem Fahrzeug 2 entfernt. Die Zinken 38 des Niederhubwagens 37 weisen an ihrer Unterseite Lastrollen 39 auf zum Abrollen auf dem Fahrgestell oder auf einer Rampe 40. Zusätzlich kann der Niederhubwagen, wie in Figur 8 gezeigt, auch über Lastrollen auf einer Oberseite der Zinken 38 aufweisen, mit denen der Adapter 7 von den Zinken 38 abgerollt werden kann.

In Figur 9 ist eine weitere Ausführungsform des hier vorgeschlagenen Verfahrens zum Be- und Entladen eines Fahrzeugsystems 1 hier vorgeschlagener Art beschrieben. Dabei werden zum Beladen des Fahrzeugs 2 mit einem Sicherheitshebelroller 41 ein Haken 42 des Sicherheitshebelrollers 41 in einen entsprechenden Aufnahmebereich des Adapters eingeführt und der Adapter 7 mit dem Sicherheitshebelroller 41 auf einer Rückseite des Adapters 7 einseitig angehoben. Der Adapter weist an einer Vorderseite eine Panzerrolle 43 auf. Der Adapter wird auf dem Sicherheitshebelroller 41 und der Panzerrolle 43 auf ein Fahrgestell 3 des Fahrzeugs 2 gerollt. Zum Absetzen des Adapters auf das Fahrgestell 3 wird die Panzerrolle 43 in eine Vertiefung auf dem Fahrgestell 3 hineingerollt. Analog wird beim Entladen des Fahrzeugs 2 mit dem Sicherheitshebelroller 41 der Haken 42 des Sicherheitshebelroller 41 in die entsprechende Aufnahme des Adapters 3 eingeführt, der Adapter 7 mit dem Ladungsträgeraufbau 5 von dem Fahrgestell 3 des Fahrzeugs 2 einseitig angehoben, wobei gleichzeitig automatisch eine Verriegelung zwischen dem Adapter 7 und dem Fahrgestell 3 gelöst wird. Anschließend wird der Adapter 7 mit dem Ladungsträgeraufbau 5 über das Fahrgestell 3 abgerollt, wobei die Panzerrolle 43 aus der Vertiefung 44 in dem Fahrgestell 3 herausgerollt wird, und von dem Fahrzeug 2 entfernt. Die Panzerrolle 43 des Adapters 7 ist einklappbar oder abnehmbar ausgeführt zum Einklappen oder Abnehmen der Panzerrolle 43 beim Bewegen des Adapters 7 über ein Rollendeck.

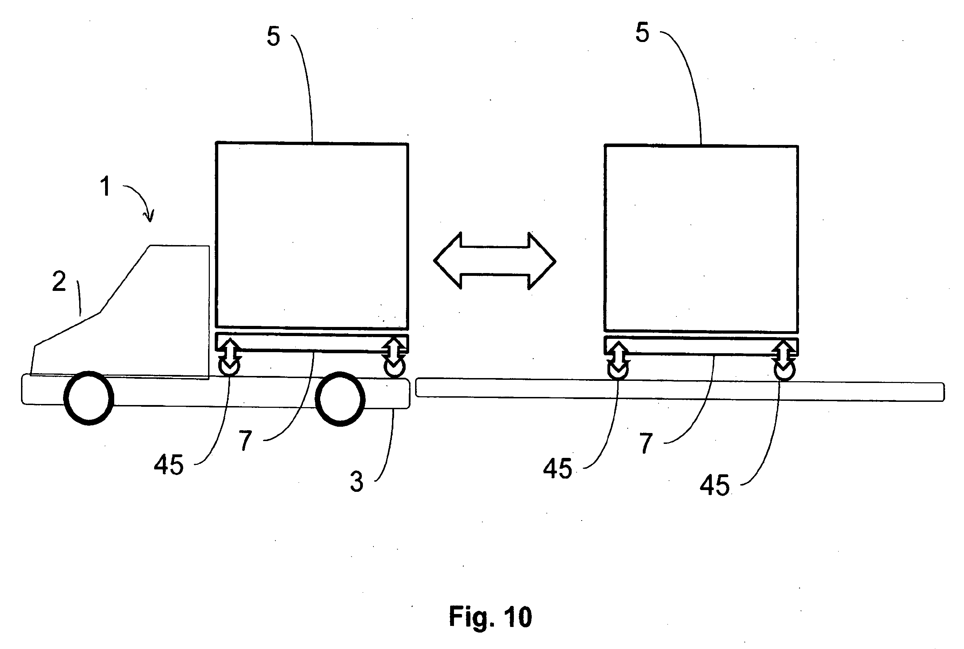

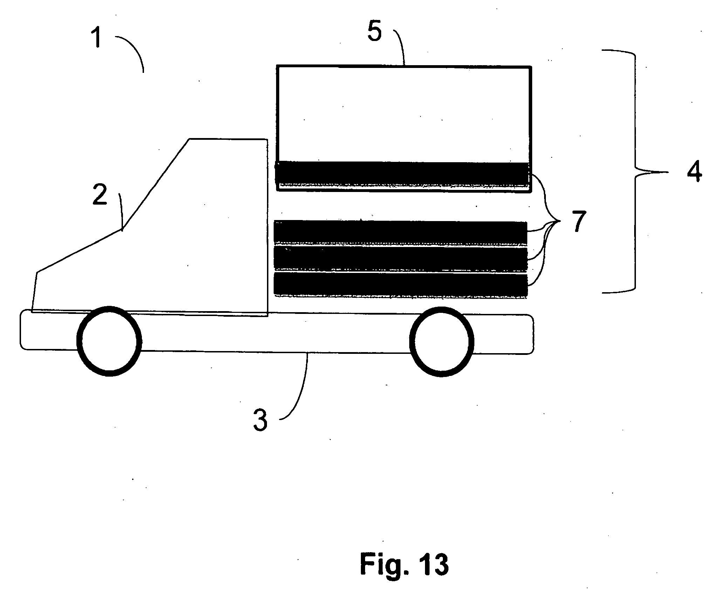

In Figur 10 ist eine weitere Ausführungsform des hier vorgeschlagenen Verfahrens zum Be- und Entladen eines Fahrzeugsystems 1 hier vorgeschlagener Art beschrieben. Dabei werden zum Beladen des Fahrzeugs 2 der Adapter 7 mit einer in dem Adapter integrierten Hebe/Senkvorrichtung angehoben. Die Hebe/Senkvorrichtung umfasst Stützbeine mit Rollen 45, welche hydraulisch nach unten ausfahrbar sind, vgl. Figur 13. Durch ein derartiges hydraulisches Herausfahren der Rollen 45 wird der Adapter 7 zusammen mit dem Ladungsträgeraufbau 5 angehoben, auf das Fahrgestell 3 gerollt und dort abgesetzt. Anschließend wird eine formschlüssige Verbindung zwischen dem Fahrgestell 3 und dem Adapter hergestellt. Analog wird beim Entladen des Fahrzeugs 2 diese Verbindung zunächst gelöst, der Adapter 7 durch die Hebe/Senkvorrichtung angehoben und von dem Fahrgestell 3 heruntergerollt.

In Figuren 11 und 12 ist eine Ausführungsform eines Adapters 7 eines Ladungsträgersystems hier vorgeschlagener Art schematisch dargestellt. Der gezeigte Adapter umfasst eine Hebe/Senkvorrichtung 46 mit hydraulisch ausfahrbaren Stützbeinen 47, an denen Rollen 45 befestigt sind. In Figur 11 sind die Stützbeine 47 in einem eingefahrenen Zustand gezeigt, in dem die Rollen vollständig in dem Adapter 7 versenkt sind. In Figur 12 sind die Stützbeine 47 in einem ausgefahrenen Zustand gezeigt. Die Hebe/Senkvorrichtung 46 ist zur Energieversorgung mit einem in einem Hohlraum 8 des Adapters 7 enthaltenen Energiespeicher 9 verbunden.

In die Hebe/Senkvorrichtung (46) ist ferner eine Drehvorrichtung (46) integriert. Diese ist dazu eingerichtet die Stützbeine 47 um eine Längsachse der Stützbeine 47 zu drehen, zur Einstellung einer Drehrichtung (Drehachse) der Rollen 45 der Stützbeine 47. Auf diese Weise ist nach einer entsprechenden Einstellung der Stützbeine 47 eine Drehung des Adapters 7 (durch Abrollen des Adapters 7 über die Rollen 45 der Stützbeine 47) um eine vertikale Achse möglich. Eine solche Drehung des Adapters ist manuell durchführbar (gegebenenfalls nach einem Lösen einer Verbindung zwischen Adapter 7 und einem Fahrgestell oder einer Ladeplattform).

In Figur 13 ist ein Fahrzeugsystem hier vorgeschlagener Art gezeigt, welches ein Ladungsträgersystem 4 mit mehreren übereinander gestapelten Adaptern 7 umfasst. Die Adapter 7 enthalten Energiespeicher, die zur Versorgung eines Antriebmotors des Fahrzeugs 2 mit einem Energieübertragungssystem des Fahrzeugs 2 verbunden sind zur Vergrößerung einer Reichweite des Fahrzeugs. Der Ladungsträgeraufbau ist in einer Leichtbauweise ausgeführt zur Einsparung von Gewicht.

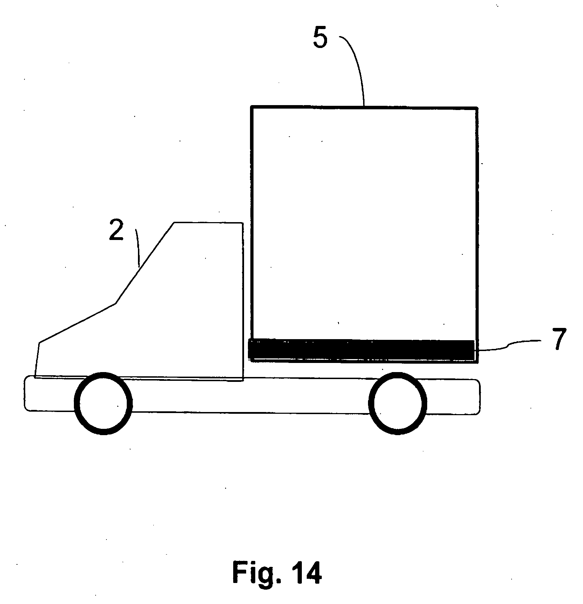

In Figur 14 ist ein Fahrzeug 2 mit einem Ladungsträgeraufbau gezeigt, der eine mit dem Ladungsträgeraufbau nichtlösbar verbundene Bodengruppe aufweist. Die Bodengruppe des Ladungsträgeraufbaus umfasst Aufnahmen für Lastaufnahmemittel (für Gabelstapler, Kran, Niederhubwagen, Sicherheitshebelroller), Schnittstellen für eine Energieübertragung und eine Datenübertragung mit dem Fahrzeug und einem stationären Energiemanagementsystem, eine Telematikeinheit, ausfahrbare Stützbeine mit Rollen. Ferner weist die Bodengruppe mehrere verschiedene Verbindungselemente auf für eine Verbindbarkeit des Ladungsträgersystems mit unterschiedlichen Fahrzeugen.

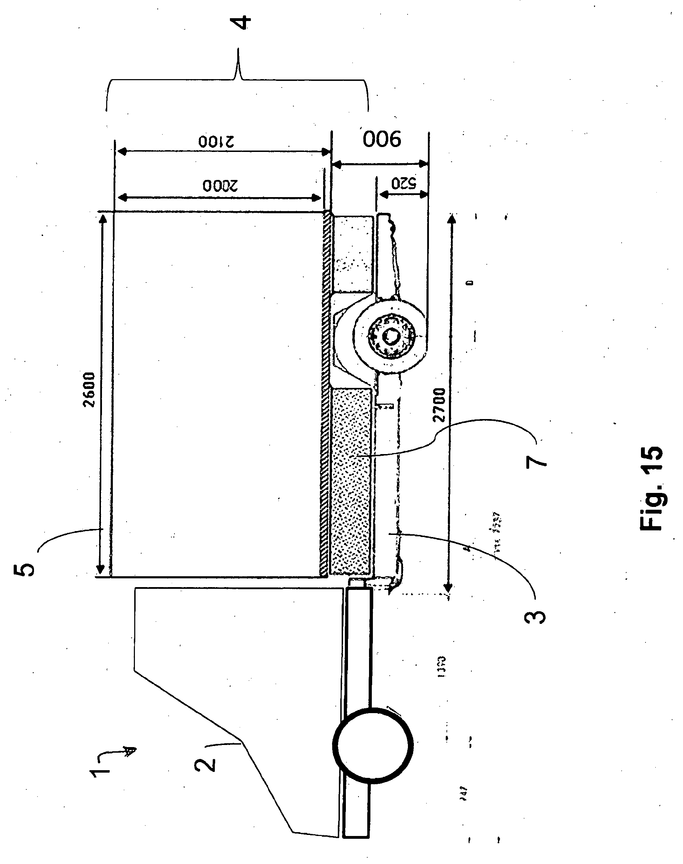

In Figuren 15 bis 19 ist eine weitere spezielle Ausführungsform eines Fahrzeugsystems 1 hier vorgeschlagener Art schematisch dargestellt. Das in diesen Figuren gezeigte Fahrzeugsystem 1 unterscheidet sich von dem in Figur 1 gezeigten Fahrzeugsystem 1 nur durch die im Folgenden näher beschriebenen zusätzlichen bzw. alternativen Merkmale. Die Bezugszeichen für einander entsprechende Merkmale wurden beibehalten.

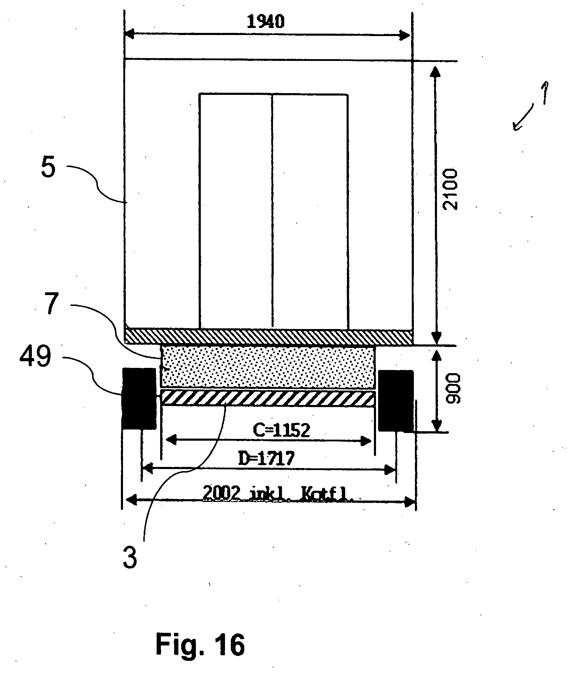

Das Fahrzeug 2 des Fahrzeugsystems 1 weist ein Fahrgestell 3 auf, das gleichzeitig ein Trägerrahmen zum Tragen des Ladungsträgersystems ist. Das Fahrgestell 3, also der Trägerrahmen, ist in der Form eines Niederflurrahmens ausgestaltet und als ein solcher möglichst flach gebaut und in einer nur geringen Höhe oberhalb des Untergrunds, auf dem das Fahrzeug steht, angeordnet. Eine Höhe des Niederflurrahmens, also der Abstand zwischen einer Oberseite des Niederflurrahmens und dem Untergrund beträgt in diesem Beispiel nur etwa 0,52 m. Die in den Figuren 15 und 16 eingetragenen Abmaße des Fahrzeugsystems 1 sind jeweils in Millimetern angegeben. Die Ladehöhe des Fahrzeugsystems, also der Abstand zwischen einer Unterseite des Ladungsträgeraufbaus des Fahrzeugsystems und dem Untergrund beträgt in diesem Beispiel vorteilhafterweise nur 0,9 m.

Der Niederflurrahmen, also das Fahrgestell 3, ist als Leiterrahmen ausgestaltet und verläuft vollständig zwischen den Rädern 49 des Fahrzeugs, also insbesondere nicht oberhalb der Räder 49. Die hintere Radachse zwischen den Räder 49 des Fahrzeugs 2 verläuft durch den Niederflurrahmen hindurch. Ein Adapter 7, der auf dem Niederflurrahmen aufliegt und gleichzeitig eine Bodengruppe eines Ladungsträgeraufbaus 5 bildet, ist teilweise zwischen den Rädern 49 des Fahrzeugs 2 angeordnet, wobei jedoch seine Oberseite mit einer Höhe von etwa 0,9 m, vgl. Figur 16, über die Räder 49 hinausragt. Der Adapter 7, der in der Form eines Tiefbaurahmens ausgestaltet ist, hat eine Gesamtbreite von etwa 1,15 m (gemessen in Richtung der Radachsen des Fahrzeugs), so dass er auf dem Niederflurrahmen aufliegend quer zu den Radachsen des Fahrzeugs über den Niederflurrahmen hinweg bewegt werden kann, ohne dabei in einen Berührungskontakt mit den Räder 47 zu kommen. Zu diesem Zweck ist die Gesamtbreite des Adapters also kleiner als der Abstand zwischen den Rädern 49.

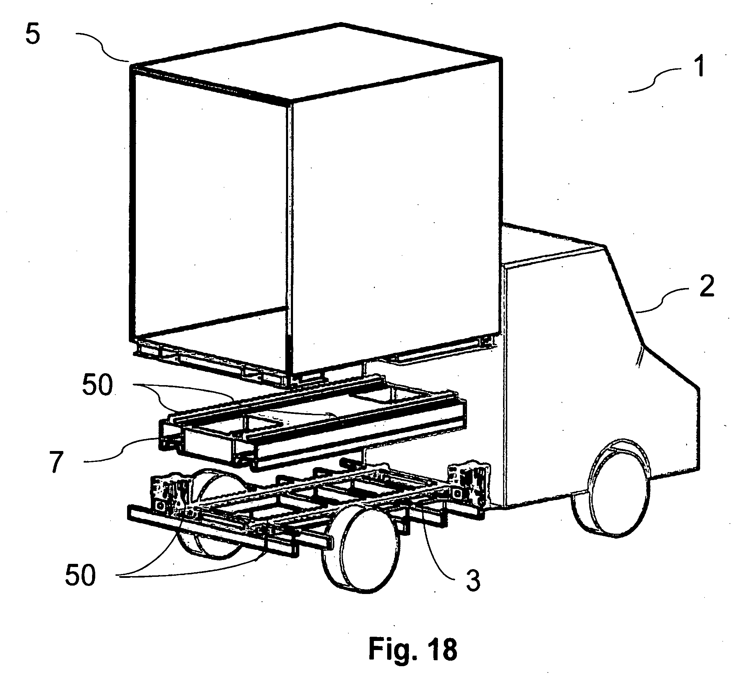

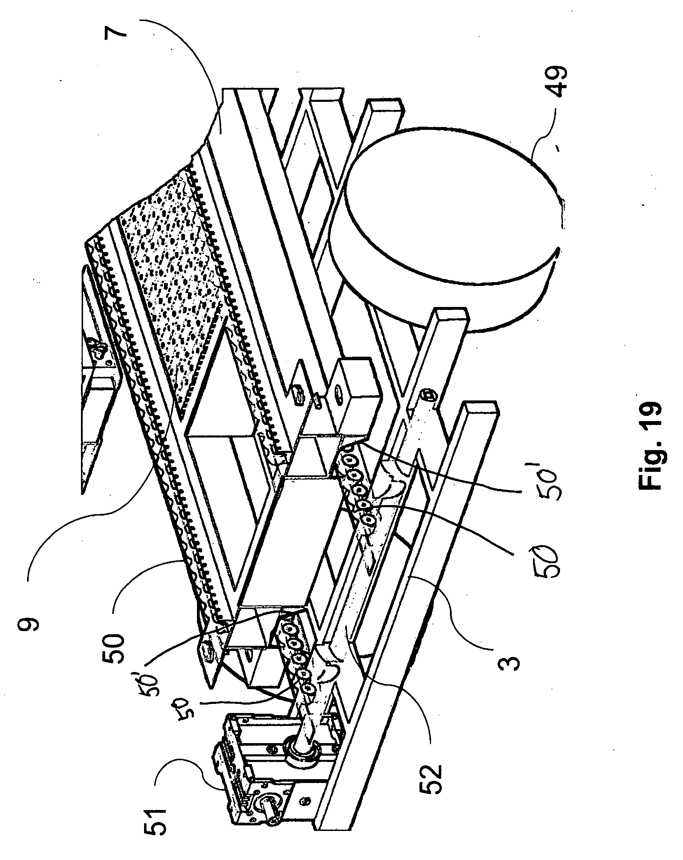

Wie in den Figuren 18 und 19 dargestellt ist, sind zum Bewegen des Adapters 7 quer zu den Radachsen Rollbahnen 50 an dem Fahrgestell 3 angeordnet. Diese Rollbahnen 50 sind mittels zweier Winkelgetriebe und Exzenterwellen 51 antreibbar zum automatischen Bewegen wahlweise des Adapters 7 oder des Ladungsträgeraufbaus 5 quer zu den Radachsen.

Wie in Figur 16 dargestellt ist, ist der Ladungsträgeraufbau 5 aufgrund der relativ großen Bauhöhe des Adapters 7 von etwa 0,45 m vollständig oberhalb der Räder 49 des Fahrzeugs angeordnet, so dass Berührungskontakte zwischen dem Ladungsträgeraufbau 5 und den Rädern des Fahrzeugs beim Bewegen des Adapters 7 ausgeschlossen sind. Der Ladungsträgeraufbau 5 ist ferner über die Räder 49 hinweg ausgedehnt und hat somit eine besonders große Gesamtbreite, die etwa der Gesamtbreite des Fahrzeugs 2 entspricht, in diesem Fall also etwa 2,0 m. Ferner eignet sich der Adapter 7 zur Aufnahme von Energiespeichern, die ihrerseits eine große Bauhöhe aufweisen und nur stehend verwendet werden können.

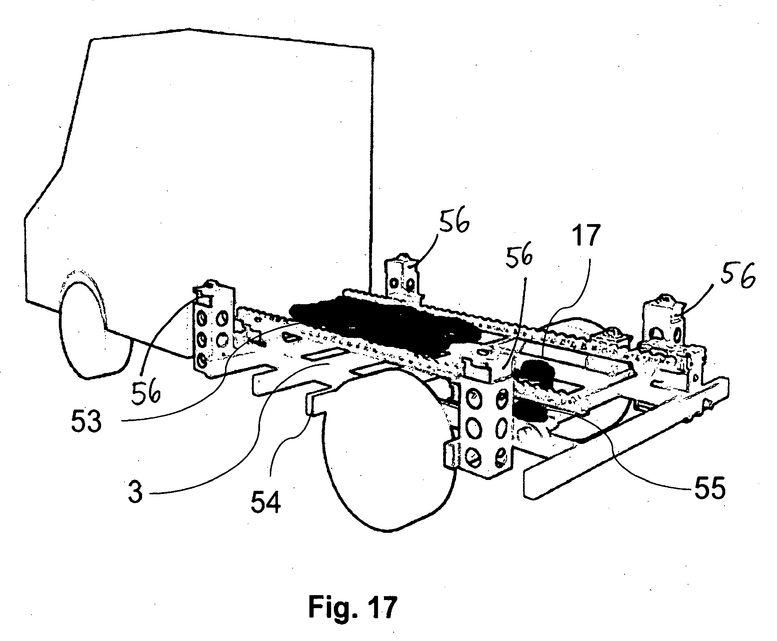

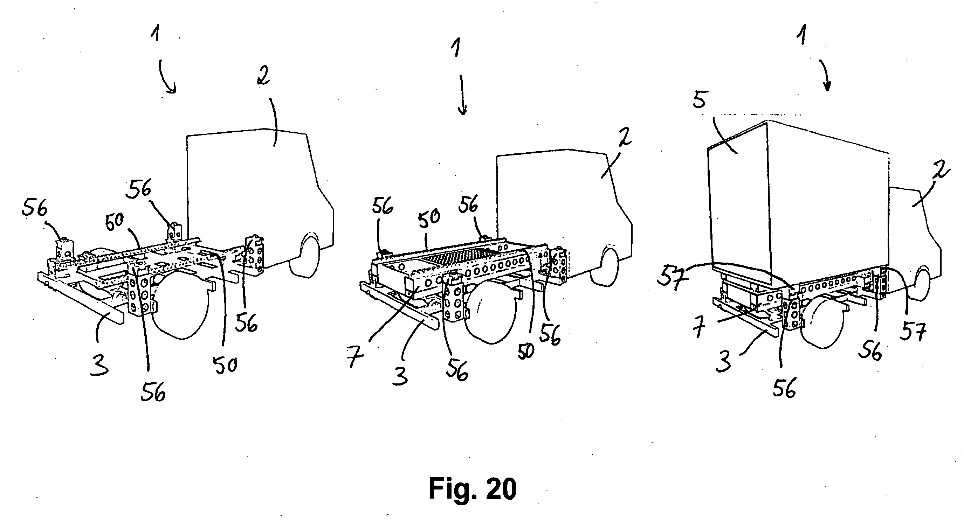

Wie in Figur 17 dargestellt ist, ist ein Antriebsmotor 17 des Fahrzeugs 2, der als Elektromotor ausgeführt ist, Energiespeicher 53 des Fahrzeugs 2 sowie ein Antriebsgetriebe 55 an Trägern 54 des Fahrgestells 3, also des Niederflurrahmens, befestigt und zwischen diesen Trägern 54 angeordnet. In Figur 17 ist außerdem eine sechste Verbindungsvorrichtung des 56 des Fahrzeugs dargestellt zur Herstellung einer direkten Verbindung mit dem Ladungsträgeraufbau 5. Dies wird anhand Figur 20 unten näher beschrieben.

Die Energiespeicher 53 des Fahrzeugs 2 sind als Elektrobatterien ausgestaltet, könnten aber genauso gut Flow/Gas-Batterien sein. Sie sind mit einem hier nicht dargestellten Energieübertragungssystem 19 des Fahrzeugs 2, vgl. Figur 1, verbunden zur Energieversorgung von Verbrauchern im Fahrzeug 2, insbesondere des Antriebmotors 17 sowie von Verbrauchern des Ladungsträgersystems 4, wie insbesondere der Kühlaggregate 20 (im Adapter 7) und 24 (im Ladungsträgeraufbau 5). Außerdem ist es möglich, über das Energieübertragungssystem die Energiespeicher 53 des Fahrzeugs 2 mittels der Energiespeicher 9 des Adapters aufzuladen.

In Figur 20 ist ein Fahrzeugsystem 1 hier vorgeschlagener Art in drei verschiedenen Ladezuständen schematisch dargestellt: mit Adapter 7 und mit Ladungsträgeraufbau 5, mit Adapter 7 und ohne Ladungsträgeraufbau 5 bzw. ohne Adapter 7 und ohne Ladungsträgeraufbau 5. Das System 1 unterscheidet sich von dem in Figur 15 gezeigten System dadurch, dass das Fahrgestell 3 des Systems eine sechste Verbindungsvorrichtung 56 aufweist und dass der Ladungsträgeraufbau 5 eine fünfte Verbindungsvorrichtung 57 aufweist, die jeweils als Twistlocks bzw. als Twistlockaufnahmen ausgestaltet sind zur Herstellung einer direkten formschlüssigen Verbindung zwischen dem Fahrzeug 2 und dem Ladungsträgeraufbau 5. Die erste, zweite, dritte und vierte Verbindungsvorrichtung des Adapters 7, des Fahrgestells 3 bzw. des Ladungsträgeraufbaus sind jeweils als Rollbahnen 50 oder als Aufnahmen 50' dieser Rollbahnen 50 ausgestaltet, entsprechend der Darstellung in Figur 19, und dienen einem einfachen und schnellen Laden und Entladen sowie einer mechanischen Stabilisierung zwischen dem Fahrzeug 2, dem Adapter 7 und dem Ladungsträgeraufbau 5 beim Laden und Entladen. Die fünfte Verbindungsvorrichtung 57 und die sechste Verbindungsvorrichtung 56 dienen einer kraft- und formschlüssigen Befestigung des Ladungsträgeraufbaus 5 an dem Fahrzeug 2. Diese Verbindungsvorrichtungen 56, 57 sind zudem als Schnittstellen zur Energie- und Datenübertragung zwischen dem Fahrzeug 2 und dem Ladungsträgeraufbau 5 ausgestaltet.

### Bezugszeichenliste:

1. Fahrzeugsystem
2. Fahrzeug
3. Fahrgestell
4. Ladungsträgersystem
5. Ladungsträgeraufbau
6. Transportgut
7. Adapter (Bodengruppe)
8. Hohlraum
9. Energiespeicher
10. erste Verbindungsvorrichtung
11. vierte Verbindungsvorrichtung
12. zweite Verbindungsvorrichtung
13. dritte Verbindungsvorrichtung
14. Energieschnittstelle im Adapter
15. Energieschnittstelle im Fahrzeug
16. Energieschnittstelle im Ladungsträgeraufbau
17. Elektromotor
18. Datenschnittstelle und Telematik/Lokalisierungseinheit im Fahrzeug
19. Energieübertragungssystem des Fahrzeugs
20. Kühlaggregat im Ladungsträgeraufbau
21. Datenschnittstelle und Telematik/Lokalisierungseinheit in dem Ladungsträgeraufbau
22. Energieübertragungssystem im Ladungsträgeraufbau
23. Datenschnittstelle und Telematik/Lokalisierungseinheit in dem Adapter
24. Kühlaggregat im Adapter
25. Rekuperationsbremse
26. Solarzellenmodul
27. Aufnahme für Zinken eines Gabelstaplers
28. Zinken eines Gabelstaplers
29. Aufnahmebereiche für einen Kran
30. Aufnahmebereiche für Zinken eines eine Hubwagens
31. Zinken eines Hubwagens
32. Aufnahmebereiche für einen Sicherheitshebelroller
33. Aufnahmebereiche für einen Gabelstapler
34. Auflageflächen ohne seitliche Führung
35. Auflageflächen mit seitlicher Führung
36. Gabelstapler
37. Niederhubwagen
38. Zinken eines Niederhubwagens
39. Lastrollen
40. Rampe
41. Sicherheitshebelroller
42. Haken eines Sicherheitshebelrollers
43. Panzerrolle an Adapter
44. Vertiefung für Panzerrolle
45. Rollen an Stützbeinen
46. kombinierte Hebe/Senkvorrichtung und Drehvorrichtung
47. ausfahrbare Stützbeine
48. Stapel von Adaptern
49. Räder des Fahrzeugs
50. Rollbahn
51. Winkelgetriebe
52. Exzenterwelle
53. Energiespeicher des Fahrzeugs
54. Träger des Fahrgestells
55. Antriebsgetriebe des Fahrzeugs
56. sechste Verbindungsvorrichtung
57. fünfte Verbindungsvorrichtung

## Patentansprüche

1. Ladungsträgersystem (4) für ein Fahrzeug (2), insbesondere für ein Elektrofahrzeug, wobei das Ladungsträgersystem (4) eine Bodengruppe umfasst, die einen als Elektrobatterie, als Brennstoffbehälter für eien Brennstroffzelle oder als Flow/Gas-Batterie ausgestalteten Energiespeicher (9) beinhaltet und eine erste Verbindungsvorrichtung (10) zum Herstellen einer lösbaren Verbindung zwischen der Bodengruppe des Ladungsträgersystems (4) und dem Fahrzeug (2) aufweist, wobei das Ladungsträgersystem (4) einen Ladungsträgeraufbau (5) zum Aufnehmen eines Transportguts (6) umfasst, wobei die Bodengruppe als ein von dem Ladungsträgeraufbau (5) lösbarer, einen Hohlraum (8) zur Aufnahme des Energiespeichers (9) sowie von Sensor-, Telematik-, Lokalisierungs-, Regelungs- oder Steuerungseinheiten oder Kühlaggregate aufweisender Adapter (7) ausgestaltet ist, wobei der Adapter (7) eine zweite Verbindungsvorrichtung (12) aufweist, die mit einer dritten Verbindungsvorrichtung (13) des Ladungsträgeraufbaus (5) zum Herstellen einer lösbaren Verbindung zwischen dem Adapter (7) und dem Ladungsträgeraufbau (5) verbindbar ist, wobei der Adapter (7) eine Schnittstelle (14) aufweist, über die der in dem Adapter (7) enthaltene Energiespeicher (9) mit einer Schnittstelle (15) eines Energieübertragungssystems (19) des Fahrzeugs (2) und mit einer Schnittstelle (16) eines Energieübertragungssystems (22) des Ladungsträgeraufbaus (5) zur Energieversorgung eines elektrischen Antriebmotors (17) des Fahrzeugs (2) oder einer Telematikeinheit im Fahrzeug (2) und einer aktiven Hebe/Senkvorrichtung (46), eines Kühlaggregats (20), eines Klimaaggregats, einer Beleuchtungseinrichtung oder einer Telematikeinheit im Ladungsträgeraufbau (5) verbindbar ist,
**dadurch gekennzeichnet,**
**dass** der Adapter (7) ausklappbare oder ausfahrbare Stützbeine (47) mit Rädern oder Rollen oder direkt an einer Unterseite des Adapters (7) oder seitlich am Adapter (7) angeordnete Räder oder Rollen aufweist, wobei der Adapter (7) außerdem einen Antrieb für die Rollen in Form eines Elektromotors aufweist, sodass sich der Adapter (7) selbsttätig auf das Fahrzeug (2) oder von diesem wieder herunter bewegen kann.

2. Ladungsträgersystem nach Anspruch 1, **dadurch gekennzeichnet, dass** das Ladungsträgersystem (1) außerdem mehrere derartige Adapter (7) umfasst, wobei die Adapter (7) auf dem Fahrzeug (2) in einem Stapel (48) übereinander stapelbar sind womit für das Fahrzeug (2) verfügbare Gesamtenergiemenge gesteigert und somit eine Reichweite oder eine Leistung (Zugkraft, Geschwindigkeit) des Fahrzeugs (2) vergrößert wird, wobei ein unterster Adapter (7) in dem Stapel (48) über dessen erste Verbindungsvorrichtung (10) mit dem Fahrzeug (2) und ein oberster Adapter (7) in dem Stapel (48) über dessen zweite Verbindungsvorrichtung (12) mit dem Ladungsträgeraufbau (5) verbindbar ist.

3. Ladungsträgersystem (4) nach einem der vorausgehenden Ansprüche, **dadurch gekennzeichnet, dass** der Adapter (7) eine Datenschnittstelle (23) aufweist für eine Datenübertragung zwischen der Datenschnittstelle (23) des Adapters (7) und einer Datenschnittstelle (18) des Fahrzeugs (2) und einer Datenschnittstelle (21) des Ladungsträgeraufbaus (5).

4. Ladungsträgersystem (4) nach einem der vorausgehenden Ansprüche, **dadurch gekennzeichnet, dass** der Adapter (7) die Hebe/Senkvorrichtung (46) aufweist, die dazu eingerichtet ist, den Ladungsträgeraufbau (5) oder den Adapter (7) zusammen mit dem Ladungsträgeraufbau (5) anzuheben und abzusenken.

5. Ladungsträgersystem (4) nach einem der vorausgehenden Ansprüche, **dadurch gekennzeichnet, dass** der Adapter (7) eine Drehvorrichtung (46) zum Drehen des Ladungsträgeraufbaus (5) aufweist.

6. Ladungsträgersystem (4) nach einem der vorausgehenden Ansprüche, **dadurch gekennzeichnet, dass** der Adapter (7) und der Ladungsträgeraufbau (5) eine Telematik/Lokalisierungseinheit (21, 23) aufweisen, wobei der Adapter (7) und der Ladungsträgeraufbau (5) ferner eine Funk-Sender/Empfängereinrichtung (21, 23) zur Übertragung von Ortskoordinaten der Telematik/Lokalisierungseinheit (21, 23) an ein stationäres elektronisches Energiemanagementsystem zur Ortung des Adapters und des Ladungsträgeraufbaus (5) und zur Berechnung dynamischer Fahrtrouten unter Berücksichtigung eines Ladezustands des Energiespeichers (9) umfassen.

7. Fahrzeugsystem (1), umfassend ein Fahrzeug (2), insbesondere ein Elektrofahrzeug, und ein Ladungsträgersystem (4) nach einem der vorangehenden Ansprüche, wobei das Fahrzeug (2) eine vierte Verbindungsvorrichtung (11) aufweist, die mit der ersten Verbindungsvorrichtung (10) des Adapters (7) zum Herstellen einer lösbaren Verbindung zwischen dem Fahrzeug (2) und dem Adapter (7) verbindbar ist.

8. Fahrzeugsystem (1) nach Anspruch 7, **dadurch gekennzeichnet, dass** der Energiespeicher (9) des Ladungsträgersystems (4) über eine Schnittstelle (14, 15) mit einem Energieübertragungssystems (19) des Fahrzeugs (2) neben der Energieversorgung eines Antriebsmotors (17) des Fahrzeugs (2) zum Aufladen des Energiespeichers (9) über Lichtmaschine des Fahrzeugs (2), eine Rekuperationsbremse oder über Solarzellen verbindbar ist.

9. Fahrzeugsystem (1) nach einem der Ansprüche 7 oder 8, **dadurch gekennzeichnet, dass** das Fahrzeug (2) einen Trägerrahmen (3) zum Tragen des Ladungsträgersystems (4) aufweist, wobei der Trägerrahmen (3) des Fahrzeugs (2) für geringe Ladehöhe des Ladungsträgersystems (4) als Niederflurrahmen ausgestaltet ist.

10. Fahrzeugsystem (1) nach einem der Ansprüche 7 bis 9, dadurch gekenntzeichnet, dass das Fahrzeug (2) eine Rollbahn mit einem Antriebsmodul zum automatischen Bewegen des Adapters längs oder quer zu Radachsen des Fahrzeugs (1) umfasst.

11. Fahrzeugsystem (1) nach einem der Ansprüche 7 bis 10, **dadurch gekennzeichnet, dass** das Ladungsträgersystem (1) mehrere derartige Adapter (7) umfasst, wobei die Adapter (7) auf dem Fahrzeug (2) in einem Stapel (48) übereinander gestapelt sind, wobei ein unterster Adapter (7) in einem solchen Stapel (48) über dessen erste Verbindungsvorrichtung (10) mit dem Fahrzeug (2) und ein oberster Adapter (7) in einem solchen Stapel (48) über dessen zweite Verbindungsvorrichtung (12) mit dem Ladungsträgeraufbau (5) verbunden ist.

12. Verfahren für ein Beladen eines Fahrzeugsystems (1) nach einem der Ansprüche 7 bis 11, bei dem zuerst der Adapter (7) des Ladungsträgersystems (4) mit dem Fahrzeug (2) verbunden wird und danach der Ladungsträgeraufbau (5) des Ladungsträgersystems (4) mit dem Adapter (7) verbunden wird oder bei dem zuerst der Ladungsträgeraufbau (5) mit dem Adapter (7) verbunden wird und danach der Adapter (7) mit dem Fahrzeug (2) verbünden wird, wobei der Antrieb des Adapters (7) die Räder oder Rollen des Adapters (7) antreibt und sich der Adapter selbsttätig auf das Fahrzeug rollt.

13. Verfahren für ein Entladen eines Fahrzeugsystems (1) nach einem der Ansprüche 7 bis 11, bei dem zuerst eine lösbare Verbindung zwischen der ersten Verbindungsvorrichtung (10) des Adapters (7) des Ladungsträgersystems (4) und der vierten Verbindungsvorrichtung (11) des Fahrzeug (2) gelöst wird und danach das Ladungsträgersystem (4) von dem Fahrzeug (2) entfernt wird oder bei dem zuerst eine lösbare Verbindung zwischen der zweiten Verbindungsvorrichtung (12) des Adapters (7) und der dritten Verbindungsvorrichtung (13) des Ladungsträgeraufbaus (5) gelöst wird und anschließend Ladungsträgeraufbau (5) des Ladungsträgersystems (4) von dem mit dem Fahrzeug (2) verbundenen Adapter (7) gelöst wird, wobei der Antrieb des Adapters (7) die Räder oder Rollen des Adapters (7) antreibt und sich der Adapter (7) selbsttätig von dem Fahrzeug (2) herunterrollt.

14. Verfahren nach einem der Ansprüche 12 oder 13, **dadurch gekennzeichnet, dass** der Ladungsträgeraufbau (5) oder der Adapter (7) zusammen mit dem Ladungsträgeraufbau (5) mittels einer in dem Adapter (7) integrierten Hebe/Senkvorrichtung (46) abgesenkt oder angehoben wird.

15. Verfahren nach Anspruch 14, **dadurch gekennzeichnet, dass** die Hebe/Senkvorrichtung (46) mit einem Elektromotor oder einem Hydrauliksystem ausgestattet ist, die durch den in den Adapter (7) enthaltenen Energiespeicher (9) mit Energie versorgt wird.

## Claims

1. A load-carrying system (4) for a vehicle (2), in particular for an electric vehicle, the load-carrying system (4) comprising a substructure that includes an energy storage system (9) in the form of an electric battery, a fuel tank for a fuel cell, or a flow/gas battery, and has a first connection device (10) to create a detachable connection between the substructure of the load-carrying system (4) and the vehicle (2), the load-carrying system (4) comprising a load-carrying body (5) to hold a cargo (6), the substructure being in the form of an adapter (7) that is detachable from the load-carrying body (5) and that has a hollow space (8) to hold the energy storage system (9), and sensor units, telematics units, localization units, closed-loop or open-loop control units, or refrigerators, the adapter (7) having a second connection device (12) that can be connected with a third connection device (13) of the load-carrying body (5) to create a detachable connection between the adapter (7) and the load-carrying body (5), the adapter (7) having an interface (14) through which the energy storage system (9) contained in the adapter (7) can be connected with an interface (15) of an energy transmission system (19) of the vehicle (2) and with an interface (16) of an energy transmission system (22) of the load-carrying body (5) to supply energy to an electric drive motor (17) of the vehicle (2) or a telematics unit in the vehicle (2) and an active lifting / lowering device (46), a refrigerator (20), an air conditioner, a lighting device, or a telematics unit in the load-carrying body (5), **characterized in that**
the adapter (7) has fold-out or extendable support legs (47) with wheels or rollers, or wheels or rollers arranged directly on a bottom of the adapter (7) or on the side of the adapter (7), the adapter (7) also having a drive for the rollers in the form of an electric motor, so that the adapter (7) can move onto the vehicle (2) or back down off it automatically.

2. The load-carrying system according to claim 1, **characterized in that** the load-carrying system (1) additionally comprises multiple such adapters (7), which can be stacked on top of one another in a stack (48) on the vehicle (2), increasing the total amount of energy available for the vehicle (2), and thus increasing a range or a power (traction force, speed) of the vehicle (2), it being possible for a lowest adapter (7) in the stack (48) to be connected with the vehicle (2) through its first connection device (10) and for a topmost adapter (7) in the stack (48) to be connected with the load-carrying body (5) through its second connection device (12).

3. The load-carrying system (4) according to one of the preceding claims, **characterized in that** the adapter has (7) a data interface (23) for data transmission between the data interface (23) of the adapter (7) and a data interface (18) of the vehicle (2) and a data interface (21) of the load-carrying body (5).

4. The load-carrying system (4) according to one of the preceding claims, **characterized in that** the adapter (7) has the lifting / lowering device (46), which is set up to raise and lower the load-carrying body (5) or the adapter (7) together with the load-carrying body (5).

5. The load-carrying system (4) according to one of the preceding claims, **characterized in that** the adapter (7) has a rotating device (46) to rotate the load-carrying body (5).

6. The load-carrying system (4) according to one of the preceding claims, **characterized in that** the adapter (7) and the load-carrying body (5) have a telematic / localization unit (21, 23), the adapter (7) and the load-carrying body (5) also comprising a radio transmission / reception device (21, 23) to transfer positional coordinates of the telematic / localization unit (21, 23) to a stationary electronic energy management system to locate the adapter and the load-carrying body (5) and to calculate dynamic travel routes taking into consideration a charge level of the energy storage system (9).

7. A vehicle system (1), comprising a vehicle (2), in particular an electric vehicle, and a load-carrying system (4) according to one of the preceding claims, wherein the vehicle (2) has a fourth connection device (11) that can be connected with the first connection device (10) of the adapter (7) to create a detachable connection between the vehicle (2) and the adapter (7).

8. The vehicle system (1) according to claim 7, **characterized in that** the energy storage system (9) of the load-carrying system (4) can be connected, through an interface (14, 15), with an energy transmission system (19) of the vehicle (2) in addition to the energy supply of a drive motor (17) of the vehicle (2) to charge the energy storage system (9) through the alternator of the vehicle (2), a regenerative brake, or through solar cells.

9. The vehicle system (1) according to one of claims 7 or 8, **characterized in that** the vehicle (2) has a support frame (3) to carry the load-carrying system (4), the support frame (3) of the vehicle (2) being designed as a low-floor frame for a small loading height of the load-carrying system (4).

10. The vehicle system (1) according to one of claims 7 through 9, **characterized in that** the vehicle (2) comprises a rolling surface with a drive module for automatic movement of the adapter in the longitudinal or transverse direction to the wheel axles of the vehicle (1).

11. The vehicle system (1) according to one of claims 7 through 10, **characterized in that** the load-carrying system (1) comprises multiple such adapters (7), which can be stacked on top of one another in a stack (48) on the vehicle (2), it being possible for a lowest adapter (7) in such a stack (48) to be connected with the vehicle (2) through its first connection device (10) and a topmost adapter (7) in such a stack (48) to be connected with the load-carrying body (5) through its second connection device (12).

12. A process for loading a vehicle system (1) according to one of claims 7 through 11, wherein first the adapter (7) of the load-carrying system (4) is connected with the vehicle (2) and then the load-carrying body (5) of the load-carrying system (4) is connected with the adapter (7), or wherein first the load-carrying body (5) is connected with the adapter (7) and then the adapter (7) is connected with the vehicle (2), the drive of the adapter (7) driving the wheels or rollers of the adapter (7) and the adapter automatically rolling onto the vehicle.

13. A process for unloading a vehicle system (1) according to one of claims 7 through 11, wherein first a detachable connection between the first connection device (10) of the adapter (7) of the load-carrying system (4) and the fourth connection device (11) of the vehicle (2) is detached and then the load-carrying system (4) is removed from the vehicle (2), or wherein first a detachable connection between the second connection device (12) of the adapter (7) and the third connection device (13) of the load-carrying system (5) is detached and then the load-carrying body (5) of the load-carrying system (4) is detached from the adapter (7) connected with the vehicle (2), the drive of the adapter (7) driving the wheels or rollers of the adapter (7) and the adapter (7) rolling down from the vehicle (2) automatically.

14. The process according to one of claims 12 or 13, **characterized in that** the load-carrying body (5) or the adapter (7) is lowered or raised together with the load-carrying body (5) by means of a lifting / lowering device (46) integrated in the adapter (7).

15. The process according to claim 14, **characterized in that** the lifting / lowering device (46) is equipped with an electric motor or a hydraulic system that is supplied with energy by the energy storage system (9) contained in the adapter (7).

## Revendications

1. Système support de charge (4) pour un véhicule (2),
notamment pour un véhicule électrique, où le système support de charge (4) comprend un module inférieur qui contient un accumulateur d'énergie (9), conçu sous la forme d'une batterie électrique, sous la forme d'un réservoir de carburant pour une pile à combustible ou sous la forme d'une batterie à flux /gaz, et un premier dispositif de liaison (10) pour l'établissement d'un liaison amovible entre le module inférieur du système support de charge (4) et le véhicule (2), où le système support de charge (4) présente une structure de support de charge (5) pour la réception d'un produit à transporter (6), où le module inférieur est conçu sous la forme d'un adaptateur (7) amovible, présentant un espace vide (8) pour la réception de l'accumulateur d'énergie (9) ainsi que d'unités de capteurs, de télématique, de localisation, de régulation ou de commande, ou d'ensembles pour le refroidissement, où l'adaptateur (7) présente un deuxième dispositif de liaison (12), qui peut être relié avec un troisième dispositif de liaison (13) de la structure de support de charge (5) pour l'établissement d'une liaison amovible entre l'adaptateur (7) et la structure de support de charge (5), où l'adaptateur (7) présente une interface (14) par l'intermédiaire de laquelle l'accumulateur d'énergie (9) contenu dans l'adaptateur (7) peut être relié avec une interface (15) du système de transfert d'énergie (19) du véhicule (2) et avec une interface (16) d'un système de transfert d'énergie (22) de la structure de support de charge (5) pour l'alimentation en énergie d'un moteur d'entraînement (17) électrique du véhicule (2) ou d'une unité de télématique dans le véhicule (2) et d'un dispositif actif de levage / d'abaissement (46), d'un ensemble pour le refroidissement (20), d'un ensemble climatiseur, ou d'un dispositif d'éclairage ou d'une unité de télématique dans la structure de support de charge (5), **caractérisé en ce**
**que** l'adaptateur (7) comporte des pieds supports (47), avec des roues ou des roulettes, pouvant être repliés vers le haut ou soulevés, ou des roues ou roulettes directement disposés à une partie inférieure de l'adaptateur (7) ou latéralement sur l'adaptateur (7), où l'adaptateur (7) présente en outre un entraînement pour les roulettes sous la forme d'un moteur électrique, de sorte que l'adaptateur (7) peut de nouveau se déplacer de manière autonome sur le véhicule (2) ou se rabaisser par l'intermédiaire de celui-ci.

2. Système de support de charge selon la revendication 1, **caractérisé en ce que** le système de support de charge (1) comprend en outre plusieurs adaptateurs (7) de ce type, où les adaptateurs (7) peuvent être empilés les uns au dessus des autres en une pile (48) sur le véhicule (2), ce par quoi la quantité d'énergie totale disponible pour le véhicule (2) est augmentée et ainsi une autonomie ou une puissance (force de traction, vitesse) du véhicule (2) sont augmentées, où un adaptateur inférieur (7) dans la pile (48) peut être relié avec le véhicule (2) par l'intermédiaire de son premier dispositif de liaison (10) et un adaptateur supérieur (7) dans la pile (48) peut être relié avec la structure de support de charge (5) par l'intermédiaire de son deuxième dispositif de liaison (12).

3. Système de support de charge (4) selon l'une des revendications précédentes, **caractérisé en ce que** l'adaptateur (7) présente une interface de données (23), pour une transmission de données entre l'interface de données (23) de l'adaptateur (7) et une interface de données (18) du véhicule (2), et une interface de données (21) de la structure de support de charge (5).

4. Système de support de charge (4) selon l'une des revendications précédentes, **caractérisé en ce que** l'adaptateur (7) présente le dispositif de levage / d'abaissement (46) qui est conçu pour lever et abaisser la structure de support de charge (5), ou l'adaptateur (7), ensemble avec la structure de support de charge (5).

5. Système de support de charge (4) selon l'une des revendications précédentes, **caractérisé en ce que** l'adaptateur (7) présente un dispositif de rotation (46) pour la rotation de la structure de support de charge (5).

6. Système de support de charge (4) selon l'une des revendications précédentes, **caractérisé en ce que** l'adaptateur (7) et la structure de support de charge (5) présentent une unité télématique / de localisation (21, 23), où l'adaptateur (7) et la structure de support de charge (5) présentent en outre un dispositif radio émetteur / récepteur (21, 23) pour la transmission de coordonnées de lieu de l'unité télématique / de localisation (21, 23) vers un système de gestion d'énergie électronique stationnaire pour la localisation de l'adaptateur et de la structure de support de charge (5) et pour le calcul d'itinéraires dynamiques en tenant compte d'un état de charge de l'accumulateur d'énergie (9).

7. Système de véhicule (1), comprenant un véhicule (2), notamment un véhicule électrique, et un système de support de charge (4) selon l'une des revendications précédentes, où le véhicule (2) présente un quatrième dispositif de liaison (11), qui peut être relié avec le premier dispositif de liaison (10) de l'adaptateur (7) pour l'établissement d'une liaison amovible entre le véhicule (2) et l'adaptateur (7).

8. Système de véhicule (1) selon la revendication 7, **caractérisé en ce que** l'accumulateur d'énergie (9) du système de support de charge (4) peut être relié avec un système de transfert d'énergie (19) du véhicule (2) par l'intermédiaire d'une interface (14, 15), pour la charge de l'accumulateur d'énergie (9) par l'intermédiaire d'une machine à lumière du véhicule (2), d'un frein de récupération ou par l'intermédiaire de cellules solaires, pour l'alimentation en énergie d'un moteur d'entraînement (17) du véhicule (2).

9. Système de véhicule (1) selon l'une des revendications 7 ou 8, **caractérisé en ce que** le véhicule (2) présente un cadre support (3) pour le port du système de support de charge (4), où le cadre support (3) du véhicule (2) est conçu sous la forme d'un cadre d'abaissement pour une hauteur de charge faible du système de support de charge (4).

10. Système de véhicule (1) selon l'une des revendications 7 à 9, **caractérisé en ce que** le véhicule (2) comprend une bande de roulement avec un module d'entraînement pour le déplacement automatique de l'adaptateur le long ou perpendiculairement aux axes de roues du véhicule (1).

11. Système de véhicule (1) selon l'une des revendications 7 à 10, **caractérisé en ce que** le système support de charge (1) comprend plusieurs adaptateurs (7) de ce type, où les adaptateurs (7) sont empilés les uns au dessus des autres en une pile (48) sur le véhicule (2), où un adaptateur inférieur (7) dans une telle pile (48) peut être relié avec le véhicule (2) par l'intermédiaire de son premier dispositif de liaison (10) et un adaptateur supérieur (7) dans une telle pile (48) peut être relié avec la structure de support de charge (5) par l'intermédiaire de son deuxième dispositif de liaison (12).

12. Procédé pour une charge d'un système de véhicule (1) selon l'une des revendications 7 à 11, dans lequel l'adaptateur (7) du système support de charge (4) est d'abord relié avec le véhicule (2) et ensuite la structure de support de charge (5) du système de support de charge (4) est reliée avec l'adaptateur (7), ou dans lequel la structure de support de charge (5) est d'abord reliée avec l'adaptateur (7) et ensuite l'adaptateur (7) est relié avec le véhicule (2), où l'entraînement de l'adaptateur (7) entraîne les roues ou les roulettes de l'adaptateur (7) et l'adaptateur roule de manière autonome sur le véhicule.

13. Procédé pour une décharge d'un système de véhicule (1) selon l'une des revendications 7 à 11, dans lequel une liaison amovible entre le premier dispositif de liaison (10) de l'adaptateur (7) du système de support de charge (4) et le quatrième dispositif de liaison (11) du véhicule (2) est d'abord libérée et ensuite, le système de support de charge (4) est détaché du véhicule (2), ou dans lequel une liaison amovible entre le deuxième dispositif de liaison (12) de l'adaptateur (7) et le troisième dispositif de liaison (13) de la structure de support de charge (5) est d'abord libérée et ensuite, la structure de support de charge (5) du système de support de charge (4) est détachée de l'adaptateur (7) relié avec le véhicule (2), où l'entraînement de l'adaptateur (7) entraîne les roues ou les roulettes de l'adaptateur (7) et descend en roulant de manière autonome du véhicule (2).

14. Procédé selon l'une des revendications 12 ou 13, **caractérisé en ce que** la structure de support de charge (5) ou l'adaptateur (7) sont abaissés ou élevés ensemble avec la structure de support de charge (5) au moyen d'un dispositif de levage / d'abaissement (46) intégré dans l'adaptateur (7).

15. Procédé selon la revendication 14, **caractérisé en ce que** le dispositif de levage / d'abaissement (46) est équipé d'un moteur électrique ou d'un système hydraulique qui sont alimentés en énergie par l'accumulateur d'énergie (9) contenu dans l'adaptateur (7).
